Europäisches Patentamt

European Patent Office

Office européen des brevets

(19)

(11) Publication number: **0 459 251 A1**

# EUROPEAN PATENT APPLICATION

(21) Application number: 91108044.8

(22) Date of filing: **17.05.91**

(51) Int. Cl.⁵: **G05B 19/41**

(30) Priority: **17.05.90 JP 127172/90**

(43) Date of publication of application:
**04.12.91 Bulletin 91/49**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Sawamura, Jun**
**c/o Sony Corporation 7-35 Kitashinagawa**
6-chome
Shinagawa-ku Tokyo(JP)
Inventor: **Kuragano Tetsuzo**
**c/o Sony Corporation 7-35 Kitashinagawa**
6-chome
Shinagawa-ku Tokyo(JP)

(74) Representative: **Schmidt-Evers, Jürgen,**
**Dipl.-Ing. et al**
**Patentanwälte Mitscherlich, Gunschmann**
**Dr. Körber, Schmidt-Evers, Melzer, Dr. Schulz**
**Steinsdorfstrasse 10**
**W-8000 München 22(DE)**

(54) Method for generating data defining tool path for rough machine.

(57) In a method for generating data defining the machining depth along a tool path, grid points (GP(i,j)) are generated according to split points (P(i,j)S) indicating a form of a model, and rough machining data for contour milling is generated according to the grid points, therefore such rough machining data as is capable of preventing an overcutting can be prepared. Contour points are generated and drilling points are set according to comparison result with cut planes so that the drilling points can be set easily and automatically. The contour points are retrieved successively so as to generate easily a tool path for contour milling.

FIG.9

EP 0 459 251 A1

## BACKGROUND OF THE INVENTION

### FIELD OF THE INVENTION

The present invention relates generally to a method for generating offset surface data. More particularly, the invention relates to a method for generating offset surface data particularly applicable in designing and manufacturing of contoured products utilizing data representing a free surface generated through computer aided design (CAD) and/or computer aided manufacturing (CAM) for example.

### DESCRIPTION OF THE BACKGROUND ART

In the case where the contour of the object defined by the free surface is designed using CAD technique (so called, geometric modeling), the designer generally specifies a plurality of points (articulation points) in a three dimensional coordinate system through which the surface is to pass and uses a computer to calculate a boundary line network interconnecting the plurality of specific articulated points on the basis of desired vector functions. A surface represented by a "wire frame" is thus generated. In this way, a multiple number of frame spaces enclosed with boundary lines can be formed. The above-mentioned frame processing represents a rough sketch to be designed by the designer. If a surface which can be represented by predetermined vector functions using boundary lines enclosing each frame space can be interpolated, the free surface desired by the designer (which is impossible to specify by means of a quadratic function) can, as a whole, be generated.

The surface extended over each framed space forms a basic element constituting the whole surface and is called a "patch".

To provide a more natural outer contour for the generated entire free surface, a free surface generating method has been proposed in which a control side vector around a common boundary is set again so as to extend a patch to satisfy the condition of continuity of the osculating planes at the common boundary bridging the two frame spaces.

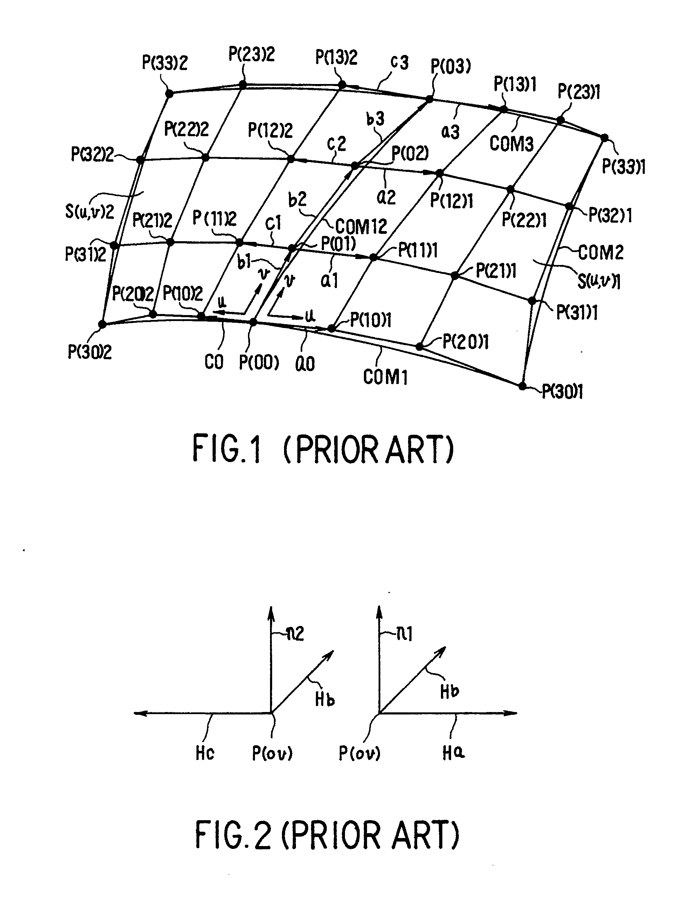

United states patent No. 4,819,192 exemplifies the above-mentioned free surface generating method. The free surface generating method disclosed in the aforementioned United States Patent will be described with reference to Figs. 1 and 2.

In the case where two patches S(u, v)1 and S(u, v)2 (denoted by vectors) are smoothly connected to each other, e.g., as shown in Fig. 1, control side vectors a1, a2, c1 and c2 so as to establish a condition of continuity of the osculating plates are, in principle, set on a common boundary COM 12 bridging adjoining patches S(u, v)1 and S(u, v)2 on the basis of articulated points P(00), P(30)1, P(33)1, P(03), P(33)2 and P-(30)2 derived through the frame processing internal control points P(11)1, P(12)1, P(11)2 and P(12)2 which are set once again by means of these control side vectors.

If the above-described techniques is applied to other common boundaries, the two patches S(u, v)1 and S(u, v)2 can be smoothly connected to other adjoining patches under the condition of continuity of the osculating planes. It is noted that "osculating plane" means a plane formed by tangent vectors in the u and v directions at each point of the common boundary. For example, when at each point on the common boundary COM 12 of Fig. 1, the osculating planes of the patches S(u, v)1 and S(u, v)2 are the same, the condition of continuity of the "osculating planes" is established.

In detail, the condition of continuity of the osculating planes at a point (o, v), wherein u = o and v = v, on the common boundary COM 12, is determined as shown in Fig. 2. That is to say, for the one patch S(u, v)1 a normal vector n1 for a tangent vector Ha in a direction traveling the common boundary COM 12 (i.e., u direction) and a tangent vector Hb in a direction along the common boundary COM 12 (i.e., v direction) can be expressed in the following equation:

$$n1 = Ha * Hb \quad (1)$$

In addition, for the other patch S(u, v)2 a normal vector n2 for a tangent vector Hc in a direction traversing the common boundary COM 12 and a tangent vector Hb in a direction along the common boundary COM 12 can be expressed in the following equation:

$$n2 = Hb * Hc \quad (2)$$

Since the two sets of tangent vectors Ha, Hb and Hc must be present on the same plane, respectively,

2

EP 0 459 251 A1

to establish the condition of continuity of the osculating planes under such a condition as described above, the two normal vectors n1 and n2 are consequently directed in the same sense.

To achieve this condition for the two normal vectors n1 and n2, the internal control points P(11)1, P(21)-1, P(12)1 P(22)1 and P(11)2, P(21)2, P(12)2, P(22)2 may be set so as to establish the following equation:

$$\lambda(v) \cdot \frac{\delta S(u, v)2}{\delta u} = \mu(v) \cdot \mu \frac{\delta S(u, v)2}{\delta u}$$

$$+ \gamma(v) \cdot \frac{\delta S(u, v)1}{\delta v} \qquad (3)$$

In the equation (3), $\lambda(v)$, $\mu(v)$ and $\gamma(v)$ denote scalars.

Furthermore, the patches S(u, v)1 and S(u, v)2 are represented using a vector function S(u, v) of a cubic Bezier equation:

$$S(u, v) = (1 - u + uE)^3 \cdot (1 - v + vF)^3 \cdot P(00) \qquad (4)$$

It is noted that u and v denote parameters in the u direction and in the v direction and E and F denote shift operators, as follows.

In the realm of practical application of this theory, i.e. describing the path to be followed by a milling tool, it is thought to be advantageous if a metallic mold of a product can be prepared automatically by driving, for example, a numerically controlled (NC) milling machine according to the form data thus generated.

In this case, furthermore, if the time required for rough machining a metallic mold can be shortened by about 70%, then the whole working hours can be shortened accordingly.

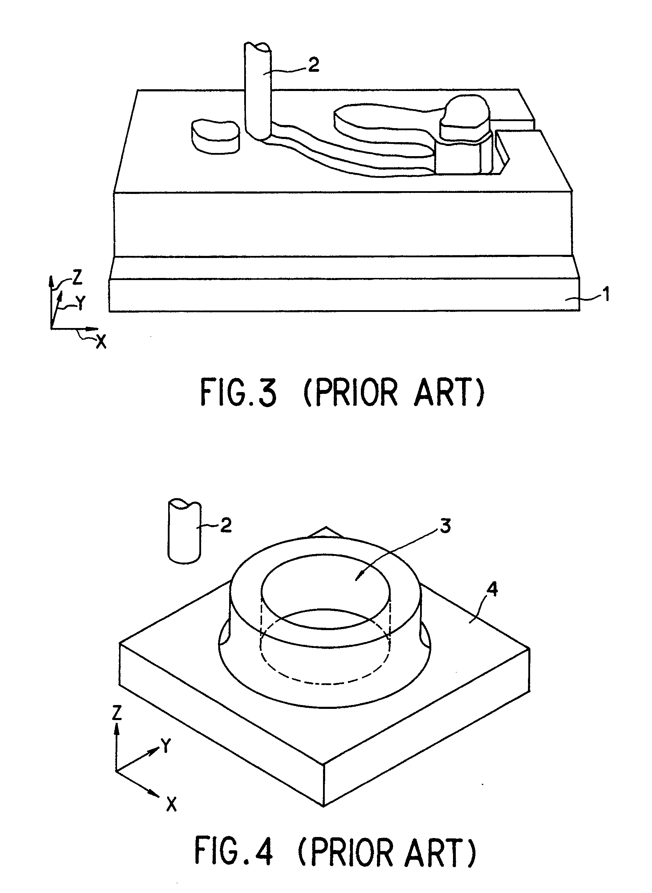

In such case, as shown in Fig. 3, a method is conceivable such that data of a tool path for contour milling which is one of the techniques for rough machining is prepared according to the form data, and a metallic mold 1 is prepared according to the data of a tool path.

Here, the contour milling is a process for cutting an outline form of a metallic mold successively by changing a position in the direction Z, for example, of an end mill 2 stepwise in sequence when cutting the metallic mold after an outline form of the product, which is suitable to an unattended rough machining.

However, in a prior art generating method for a tool path data for contour milling, there is a case, e.g. when machining the complicated metallic mold of a three-dimensional form, where tool interference is unavoidable and a metallic mold is overcut.

Further as shown in Fig. 4, in a metallic mold 4 having a recession (hereinafter called pocket portion) 3, the pocket portion 3 must be drilled beforehand for inserting an end mill therein, and thus operators need to prepare NC data separately for drilling.

Particularly in the metallic mold of a three-dimensional form, a bottom of the pocket portion varies itself complicatedly in height sometimes, and in such case operators must decide a sectional form of the pocket portion before preparing NC data for drilling so as not to cause overcutting.

Here, u and v are comprised of parameters in the directions u and v respectively, and hold relations by the following equations:

$$E \cdot P(i,j) = P(i+1, j)$$
$$(i, j = 0, 1, 2) \qquad (5)$$

$$E \cdot P(i, j) = P(i, j+1)$$
$$(i, j = 0, 1, 2) \qquad (6)$$

3

$$0 \leq u \leq 1 \quad (7)$$

$$0 \leq v \leq 1 \quad (8)$$

by means of shift operators E and F with reference to the node P(00) as a control point.

Thus, from setting control points P(01), P(02), P(10)1 to P(13)1 P(20)1 to P(23)1, P(31)1, P(32)1 and P-(01), P(02), P(10)2 to P(13)2, P(20)2 to P(23)2, P(31)2, P(32)2 in a space surrounded by four nodes P(00), P(03), P(33)1, P(30)1 and P(00), P(03), P(33)2, P(30)2, curved patches S(u, v)1 and S(u, v)2 passing through four nodes P(00), P(03), P(33)1, P(30)1 and P(00), P(03), P(33)2, P(30)2 and determined by control points P(01) to P(32)1 and P(01) to P(32)2 each can be generated.

Further in the patches S(u, v)1 and S(u, v)2 from resetting internal control points P(11)1, P(12)1 and P-(11)2, P(12)2 interposing common control points P(01), P(02) therebetween in a tangent plane continuous condition, the patches S(u, v)1 and S(u, v)2 can be connected smoothly.

Accordingly, from generating the patches sequentially through adjacent nodes with reference to the nodes inputted by the designer and reconnecting the patches thus generated, a free curved surface changing smoothly as a whole can be generated.

Thus, even in case a complicated form is designed, a form changing smoothly as a whole can be generated as intended by the designer.

## SUMMARY OF THE INVENTION

In view of the foregoing, an object of the present invention is to provide a method for generating a rough machining data for contour milling which is effective in preventing overcutting during the rough machining of metallic molds.

The foregoing object and other objects of the invention have been achieved by the provision of a method for generating data defining the machining depth along a tool path for a numerically controlled machine of the type having a machining tool of a known configuration using form data defining a three-dimensionally curved surface, comprising the steps of:

forming a plurality of split points which indicate roughly a three-dimensionally curved surface according to the form data,

forming a plurality of split points indicating the form roughly according to the form data,

forming a plurality of the grid points continuing in the directions X and Y at a predetermined pitch and having a Z coordinate value of a tool center of the end mill to prevent an overcutting according to the split points and a tool radius of the end mill, and

generating the rough machining data for contour milling by comparing the Z coordinate value of cut planes and the Z coordinate values of the grid points.

Further, a second aspect of the invention is characterized in that with respect to the plurality of contour points indicating a contour of the form cut by the cut planes which are generated according to the result obtained from comparing the Z coordinate value of the cut planes and the Z coordinate value of the grid points, the contour points ready for contour milling from around the machining target are detected sequentially according to the grid points. One of the contour points remaining at the time of detection of the contour points is set at a drilling position and the rough machining data for contour milling is generated with the drilling position as a start point according to the contour points remaining at the time of detection of the contour points.

Still further, moving paths connecting the contour points sequentially are generated according to the detection result and the rough machining data for contour milling indicating the moving paths is generated.

From generating the rough machining data for contour milling according to a result obtained from comparing the Z coordinate value of the cut planes and the Z coordinate value of the grid points, the machining data for contour milling which is effective in preventing an overcutting during rough machining is obtainable.

Further in this case, a plurality of contour points indicating a contour of the form cut by the cut planes are generated, one of the contour points remaining after detection of the contour points ready for contour milling from around the machining target is set at the drilling position, a rough machining data for the remaining contour milling is generated with the drilling position as a start point, and thus the drilling position can automatically be selected, and the machining data for contour milling can be generated easily.

Further, the contour points ready for contour milling from around the machining target are detected sequentially, and the moving paths connecting the contour points successively are generated, thereby generating the machining data for contour milling easily.

4

The nature, principle and utility of the invention will become more apparent from the following detailed description when read in conjunction with the accompanying drawings in which like parts are designated by like reference numerals or characters.

## BRIEF DESCRIPTION OF THE DRAWINGS

In the accompanying drawings:

Fig. 1 and Fig. 2 are schematic diagrams for illustrating a prior art free curved surface;

Fig. 3 is a schematic diagram for illustrating a prior art contour milling;

Fig. 4 is a schematic diagram for illustrating a prior art pocket portion;

Fig. 5 is a block diagram representing a CAD/CAM system given in one embodiment of the present invention;

Fig. 6 is a flowchart for illustrating the operation of the CAD/CAM system depicted in Fig. 5;

Fig. 7 is a flowchart for illustrating a process of generating grid points;

Fig. 8 is a schematic diagram for illustrating the generation of split points;

Fig. 9 is a schematic diagram for illustrating the correction of a tool radius;

Fig. 10 and Fig. 11 are schematic diagrams for illustrating the extraction of a patch each;

Fig. 12 is a schematic diagram for illustrating the extraction of split points;

Fig. 13 is a schematic diagram for illustrating the correction of a 2 coordinate value;

Fig. 14 is a schematic diagram for illustrating the setting of a grid point;

Fig. 15 is a schematic diagram for illustrating the setting of cut planes;

Fig. 16 and Fig. 17 are schematic diagrams for illustrating the setting of contour points;

Fig. 18 is a schematic diagram for illustrating a one-dimensional machining;

Fig. 19 is a schematic diagram for illustrating the resetting of a start point and an end point;

Fig. 20 to Fig. 25 are schematic diagrams for illustrating the generation of a tool path between the start point and the end point;

Fig. 26 is a schematic diagram for illustrating the generation of the entire tool path;

Fig. 27 is a flowchart for illustrating the generation of a contour milling tool path;

Fig. 28 to Fig. 30 are schematic diagrams for illustrating the detection of a loop start point;

Fig. 31 is a schematic diagram for illustrating the detection of the entire start point for contour milling;

Fig. 32 is a schematic diagram for illustrating the setting of a drilling position;

Fig. 33 to Fig. 36 are schematic diagrams for illustrating the retrieval of contour points;

Fig. 37 is a schematic diagram for illustrating a tool path of a drill;

Fig. 38 is a schematic diagram for illustrating a tool path for contour milling;

Fig. 39 is a perspective view showing a contour milling result;

Fig. 40 is a schematic diagram showing a tool path for one-dimensional machining;

Fig. 41 is a schematic diagram showing a tool path for contour milling according to another model;

Fig. 42 is a schematic diagram showing a tool path for one-dimensional machining thereof; and

Fig. 43 and Fig. 44 are schematic diagrams representing other embodiments.

## DETAILED DESCRIPTION OF THE INVENTION

Preferred embodiments of the present invention will be described with reference to the accompanying drawings:

### (1) General construction of CAD/CAM system

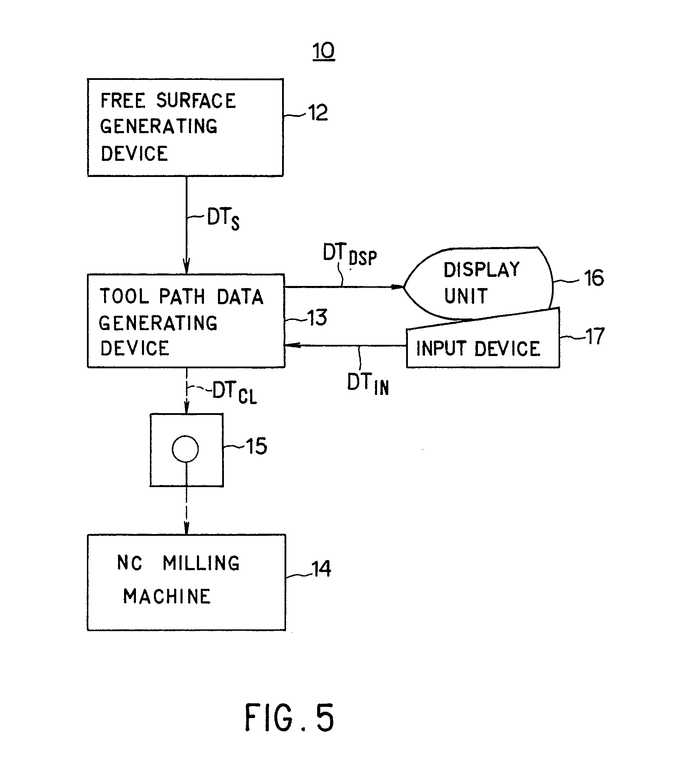

Referring now to the drawings, particularly to Fig. 5, the preferred embodiment of a machining data generating method, according to the present invention, is applicable for a CAD/CAM system as illustrated. The CAD/CAM system is generally represented by the reference numeral 10. The CAD/CAM system 10 includes a free or random surface generating device 12, a tool path data generating device 13 and a numerically controlled (NC) milling machine (machining center) 14. Respective of the free or random surface generating system 12, the tool path data generating device 13 and the NC milling machine (machining center) 14 are each provided with their own CPU (central processing units).

The free surface generating device 12 generates the form data $DT_s$ of a desired configuration of the article, which outer surface is defined by a plurality of interconnected quadrilateral patches $S(u, v)$. For generating the form data $DT_s$, CAD technology may be used. The tool path data generating device 13 receives the form data $DT_s$ from the free surface data generating device 12. Based on the received form data $DT_s$, the tool path data generating device 13 generates the machining data $DT_{CL}$ for machining roughly and finishing a metallic mold according to the form data $DT_s$, and then outputs the machining data $DT_{CL}$ for rough machining and finishing to an NC milling machine 14 through, for example, a floppy disk 15.

The NC milling machine 14 is intended for milling by means, for example, of a flat end mill according to the machining data $DT_{CL}$, thereby preparing a metallic mold of the product indicated by the form data $DT_s$.

The tool path data generating device 12 is then capable of inputting conditions such as the type of machining tool and the like as occasion demands from operating an input device 17 according to a display on a display unit 16.

(2) Preparation of grid points

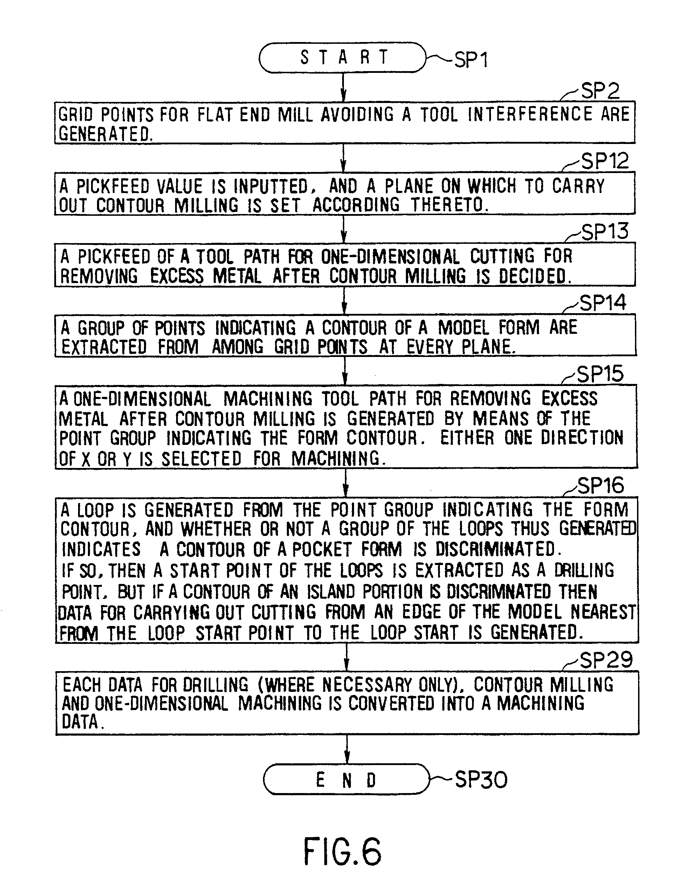

When a generation of the machining data $DT_{CL}$ is indicated by operators through the input device 17, the CPU of the tool path data generating device 13 executes the procedure shown in Fig. 6, thereby generating the machining data $DT_{CL}$ according to the form data $DT_s$.

Before beginning the procedure shown in Fig. 6, the CPU of the tool path data generating device 13 first decides a parting line according to the direction in which the metallic mold opens as assigned and inputted by operators.

Further, when the parting line is decided, patches are generated along the parting line according to the size of the metallic mold assigned and inputted by operators, thereby generating a parting surface on the product indicated by the form data $DT_s$.

Thus the CPU of the tool path data generating device 13 applies a preliminary process to the form data $DT_s$, and prepares a form data (a final machining target of the metallic mold indicated by the form data being called the model hereinafter) indicating the form of the interface of a male die and a female die, for example, which are intended for preparing the product indicated by the form data $DT_s$.

On the other hand, when the form data is already prepared completely on the model, the CPU of the tool path data generating device 13 shifts from step SP1 to step SP2, where grid points for a flat end mill avoiding a tool interference are prepared.

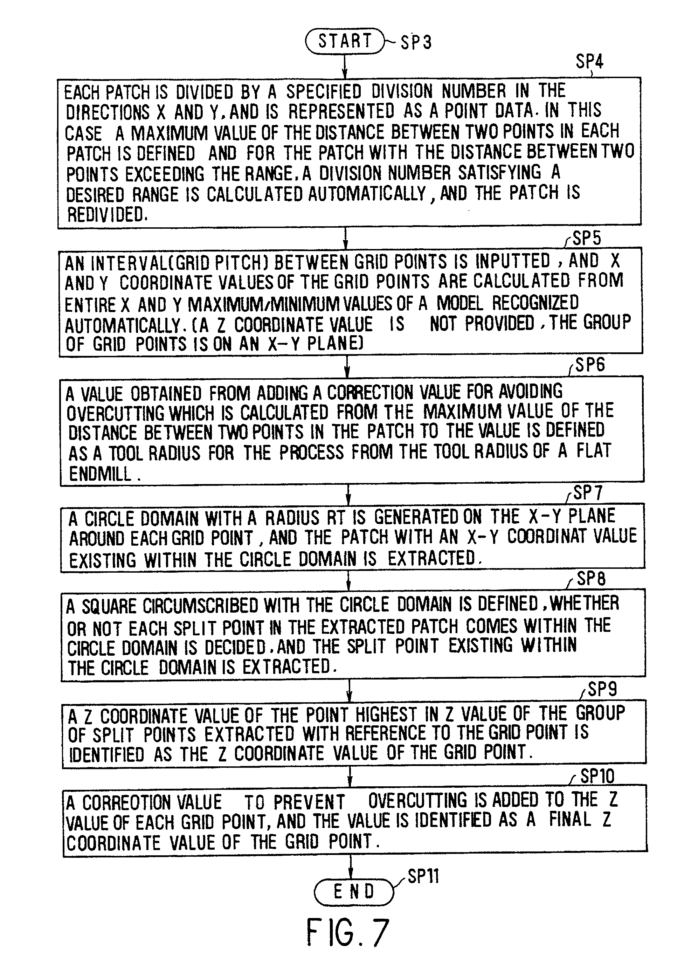

Here the grid points refer to gridiron points capable of cutting an outline form of the model without overcutting and which are generated from carrying out the subroutine procedure shown in Fig. 7.

That is, the CPU of the tool path data generating device 13 shifts from step SP3 to step SP4, where each patch is split, and a form of each patch is represented by a point data.

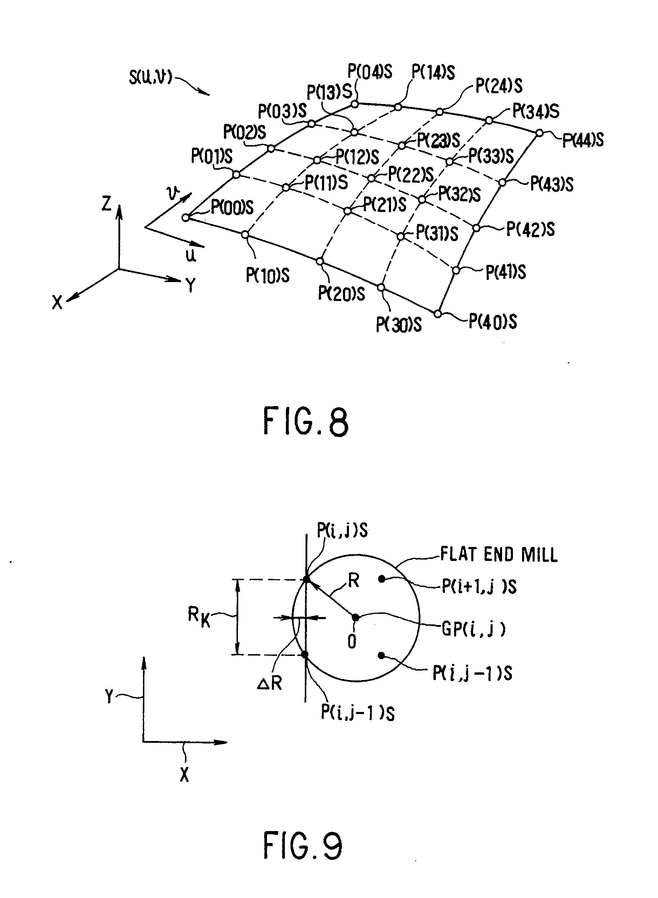

The process is that for splitting parametrically a patch $S(u, v)$ (denoted by a vector) by a split number BN initialized beforehand and in the directions u and v and generating points (hereinafter called split points) in the number determined by the split number BN on the patch $S(u, v)$, as best shown in Fig. 8, the patch $S(u, v)$ is split into four ways along the u and v directions, thereby creating 25 split points P(00)S to P(04)S, P(10)S to P(14)S, P(20)S to P(24)S, P(30)S to P(34)S, P(40)S to P(44)S (hereinafter represented by vector P(i, j)S, i, j = 0, 1, 2, 3, 4) on the patch $S(u, v)$.

Practically, a value 10 is set as an initial value of the split number BN, whereby a form of the patch $S(u, v)$ is given by 121 split points.

Further in this case, the CPU of the tool path data generating device 13 executes an arithmetic operation as:

$$R_K = \frac{R}{3} \qquad (9)$$

according to a radius R of the rough machining flat end mill assigned and inputted beforehand by operators, and specifies a maximum value $R_K$ of the distance.

Further with reference to the adjacent split points P(i, j)S, the CPU of the tool path data generating device 13 detects the horizontal distances (or distances in a plane XY when the split points P(i, j)S are mapped on the plane XY) $D_{XY}$ in sequence, and then detects the patch $S(u, v)$ with the distances coming at the maximum value of $R_K$ or more.

Still further, with reference to the patch $S(u, v)$ with the distances $D_{XY}$ being at the maximum value $R_K$ or more, the CPU of the tool path data generating device 13 resets a split number $BN_{NEW}$ from carrying out an arithmetic operation as:

$$BN_{NEW} = (INT [D_{XY}/R_K] + 1) * BN \qquad (10)$$

and resplits the patch $S(u, v)$ by the split number $BN_{NEW}$.

In Eq. (10), INT $[D_{XY}/R_K]$ comprises an operator for rounding a decimal of the value $D_{XY}/R_K$ down to integral value.

Thus in the model, the form is represented at the split points with the horizontal distances $D_{XY}$ being equal to or less than $R_X$, and in the embodiment from preparing the machining data for rough machining on the split points, the form of the patch $S(u, v)$ is given with a precision which is sufficient in practice and the time for preparing the machining data $DT_{CL}$ is shortened.

The CPU of the tool path data generating device 13 then shifts to step SP5, where grid points are set tentatively.

Here the CPU detects maximum values $X_{MAX}$, $Y_{MAX}$, $Z_{MAX}$ and minimum values $X_{MIN}$, $Y_{MIN}$, $Z_{MIN}$ from the split points $P(i, j)S$ detected in step SP4, thereby detecting the size in the directions X, Y and Z of the model.

Further according to the detection result, gridiron points are generated at a grid pitch DD inputted by operators, and the points are set tentatively to the grid points (Z coordinate value of the grid points being set tentatively to 0 in result).

Further in the CPU in this case, the grid points are set tentatively in sequence with reference to the tool radius R at the grid pitch DD on the positions where both the X and Y coordinate values are R.

Thus in the embodiment, the Z coordinate value of the grid points generated in step SP5 is reset to a value which is determined by the split points $P(i, j)S$, thereby determining the Z coordinate value of the grid points finally.

Here the grid pitch is capable of being inputted in interactive from, and thus is set to a value (2.5 mm or so when, for example, the tool radius is 10 mm) which is small as compared with the tool radius R for rough machining.

The CPU then shifts to step SP6, where a tool radius RT for the process is calculated from the tool radius R of the flat end mill.

That is, in the embodiment, a Z coordinate of the grid points $GP(i, j)$ is reset from the split points $P(i, j)S$ indicating a form of the model, thereby preparing the machining data $DT_{CL}$.

Accordingly, as shown in Fig. 9, in the plane XY, a center O of the flat end mill coincides with the grid point $GP(i, j)$, and if a section of the flat end mill comes out of a straight line connecting the split points $P(i, j)S$ and $P(i, j-1)S$ in this case, then overcutting is possible.

Thus, the following arithmetic operation:

$$RT = R + \Delta R \qquad (11)$$

is executed to calculate the tool radius RT for the process, and the machining data $DT_{CL}$ is prepared by means of the tool radius RT for the process, thereby preventing an overcutting.

Here, in case the patch $S(u, v)$ is split according to Eq. (9), $\Delta R$ will be set to a value obtained through:

$$\Delta R = R - \sqrt{R^2 - \left(\frac{R_K}{2 * 3}\right)^2} \qquad (12)$$

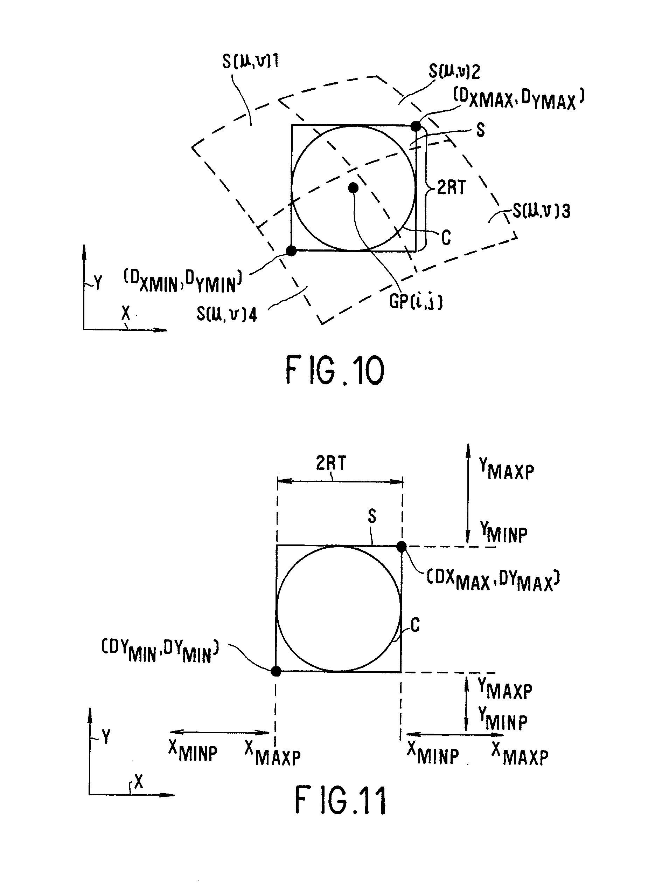

Consecutively, the CPU of the tool path data generating device 13 shifts to step SP7, where a circle domain C with the tool radius RT for the process as a radius is generated, as shown in Fig. 10, at each grid point $GP(i, j)$.

Further the CPU detects the patches $S(u, v)$ with the X and Y coordinate values included within the circle domain C at every grid point $GP(i, j)$.

In this case the CPU detects maximum values $X_{MAXP}$, $Y_{MAXP}$ and minimum values $X_{MINP}$, $Y_{MINP}$ of the X and Y coordinates of the split point $P(i, j)S$ for each patch $S(u, v)$, and also detects maximum values $D_{XMAX}$, $D_{YMAX}$ and minimum values $D_{XMIN}$, $D_{YMIN}$ of the X and Y coordinates of each circle domain C.

Further as shown in Fig. 11, a patch with the coordinate values $X_{MAXP}$ and $X_{MINP}$ smaller than the coordinate value $D_{XMIN}$, a patch with the coordinate values $X_{MAXP}$ and $X_{MINP}$ larger than the coordinate value $D_{XMAX}$, a patch with the coordinate values $Y_{MAXP}$, $Y_{MINP}$ smaller than the coordinate value $D_{YMIN}$, and a patch with the coordinate values $Y_{MAXP}$, $Y_{MINP}$ larger than the coordinate value $D_{YMAX}$ are chosen sequentially at every circle domain C, and thus a patch with the X and Y coordinate values included within a square domain S 2RT per side which is circumscribed with each circle domain C is extracted at every grid point $GP(i, j)$.

Thus the CPU decides whether or not the X and Y coordinate values are included within the circle domain C for the patch extracted as above, thereby detecting easily the patches S(u, v)1 to S(u, v)4 included within the circle domain C at every grid point GP(i, j) set tentatively.

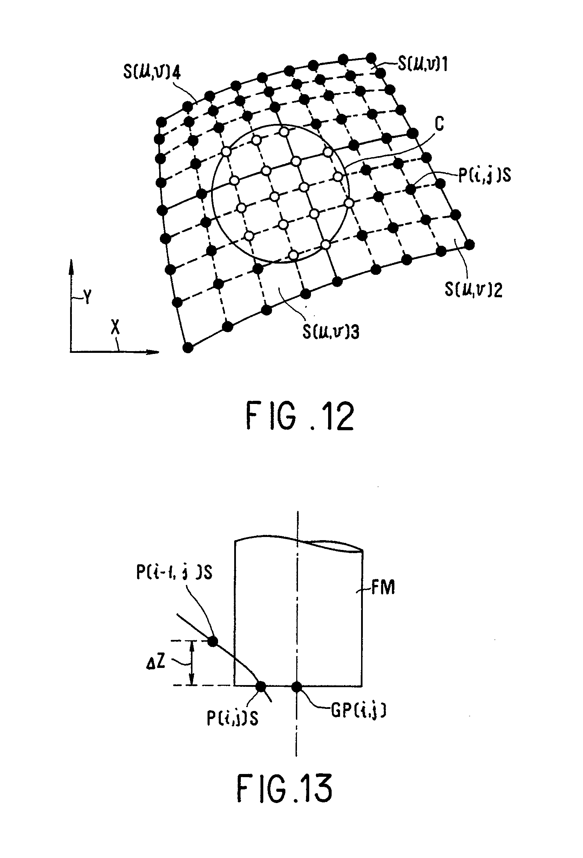

The CPU then shifts to step SP8, extracting the split points P(i, j)S with the X and Y coordinate values existing within the circle domain C, as shown in Fig. 12, for the patches S(u, v)1 to S(u, v)4 extracted in step SP7.

In the process above, a result is obtained from comparing the X and Y coordinate values of the split points P(i, j)S with the maximum values $D_{XMAX}$, $D_{YMAX}$ and the minimum values $D_{XMIN}$, $D_{YMIN}$ is obtained as in the case where the patches S(u, v)1 to S(u, v)4 are extracted in step SP7. The split points P(i, j)S having the X and Y coordinate values within the square domain S with reference to the square domain S 2RT per side which is circumscribed with each circle domain C are determined. Then it is determined whether or not the extracted split points P(i, j)S are present within the circle domain C, thereby extracting easily the split points P(i, j)S having the X and Y coordinate values within the circle domain C.

Thus in the CPU, the split points P(i, j)S are generated according to the condition of Eq. (9), thereby extracting a plurality of split points P(i, j)S at every circle domain C.

Consecutively the CPU shifts to step SP9 to extract a Z coordinate of the extracted split points P(i, j)S, and detects a maximum value $Z_{PMAX}$ of the Z coordinate at every circle domain C.

Further a Z coordinate value of the grid point GP(i, j) set tentatively is updated by the detected maximum value $Z_{PMAX}$, thus resetting the grid point GP(i, j).

The CPU then shifts to step SP10, where the Z coordinate value of the reset grid point GP(i, j) is corrected.

Here the CPU detects differences in the Z coordinate value between the adjacent points P(i, j)S in sequence at every patch S(u, v)1 to S(u, v)4 extracted in step SP7, and then detects the maximum value $\Delta Z$ thereof, thereby detecting the greatest slope of the patches S(u, v)1 to S(u, v)4 included in the circle domain C with reference to the Z coordinate value.

Further the CPU adds the maximum value $\Delta Z$ to the Z coordinate value $Z_{PMAX}$ updated in step SP9, corrects the Z coordinate value of each grid point GP(i, j) thereby, and then shifts to step SP11 to end the procedure.

That is, when the maximum value $Z_{PMAX}$ of the Z coordinate values is detected with reference to the split points P(i, j)S existing within each circle domain C, the grid point GP(i, j) is thus reset, and a rough machining is applied so that the nose of the flat end mill will come to the reset grid point GP(i, j), and overcutting will not arise on the split points P(i, j)S existing within the circle domain C.

However, forms of the patches S(u, v)1 to S(u, v)4 are represented by the split point P(i, j)S, as shown in Fig. 13, therefore if a portion greater in Z coordinate than the maximum value $Z_{PMAX}$ exists within each circle domain C, then an overcutting may result at such portion.

Accordingly in the embodiment, the greatest slope of the patches S(u, v)1 to S(u, v)4 is detected with reference to the Z coordinate value, and then the Z coordinate value $Z_{PMAX}$ of the grid point GP(i, j) is corrected according to the detection result, thereby preventing an overcutting effectively.

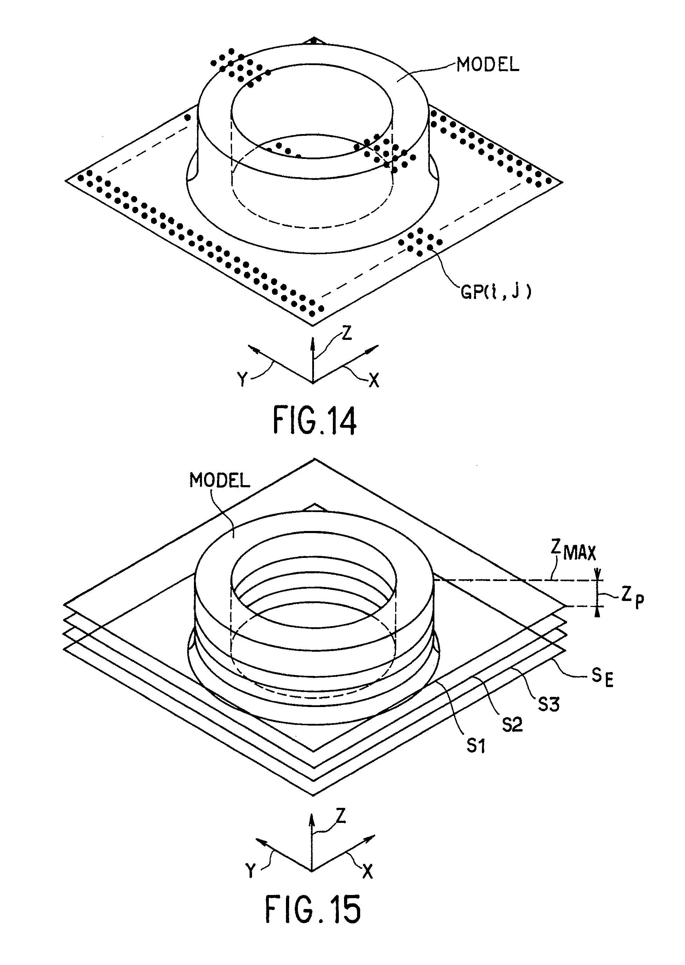

Thus, as shown in Fig. 14, in a rough machining using the flat end mill FM of the tool radius R, the grid point GP(i, j) capable of cutting an outline form of the model without overcutting may be set, and a form of the model is represented by the split points P(i, j)S, thereby generating the grid point GP(i, j) through a simple arithmetic operation as a whole.

(3) Preparation of machining data

When the grid point GP(i, j) is generated, the CPU of the tool path data generating device 13 shifts to step SP12 (Fig. 6), setting a plane for contour milling.

That is, as shown in Fig. 15, in accordance with the maximum value $Z_{MAX}$ of Z coordinate value detected in step SP5 and a Z pickfeed value $Z_P$ assigned beforehand and so inputted by operators, planes S1, S2, S3 (hereinafter called cut planes) orthogonal to an axis Z are set sequentially from the maximum value $Z_{MAX}$ at intervals of the Z pickfeed value $Z_P$.

Further the CPU sets a cut plane SE for the minimum value $Z_{MIN}$ of the Z coordinate value.

Consecutively, the CPU of the tool path data generating device 13 shifts to step SP13, where a cut pitch (hereinafter called pickfeed value) PIC at the time when an excess metal remaining after contour milling is cut is decided.

Here, the CPU inputs the pickfeed value PIC integral number of times of the grid pitch DD and satisfying a condition of the following expression:

PIC < 2R  (13)

with reference to the tool radius R of the flat end mill FM.

Thus in the CPU, tool paths are formed so that a tool center of the flat end mill FM will pass on the grid point GP(i, j).

Here in the embodiment, a value an integral number of times the grid pitch DD, satisfying Eq. (13) and most approximate to a value 0.8R with reference to the tool radius R is displayed as a candidate of the pickfeed value PIC through the display unit 16, and the operator can set the pickfeed value PIC easily.

Thus, for cutting by the candidate of the pickfeed value PIC given on the display unit 16, the pickfeed value PIC can easily be set by turning an operator "y" on without giving any consideration on the grid pitch and others.

On the other hand, when a cutting is desired in a pitch other than the candidate of the pickfeed value PIC, a candidate $PIC_K$ of the pickfeed value PIC is updated to a value given as:

$$PIC = PIC_K - DD \qquad (14)$$

by turning an operator "n" on, and is so displayed.

Thus an operator may set the pickfeed value PIC easily according to candidates of the pickfeed value PIC which are displayed successively on the display unit 16.

When the pickfeed value PIC is set, the CPU shifts to step SP14, where a point indicating an outline form of the model (hereinafter called contour point) is generated from the grid point GP(i, j) at every cut plane S1, S2, S3, SE.

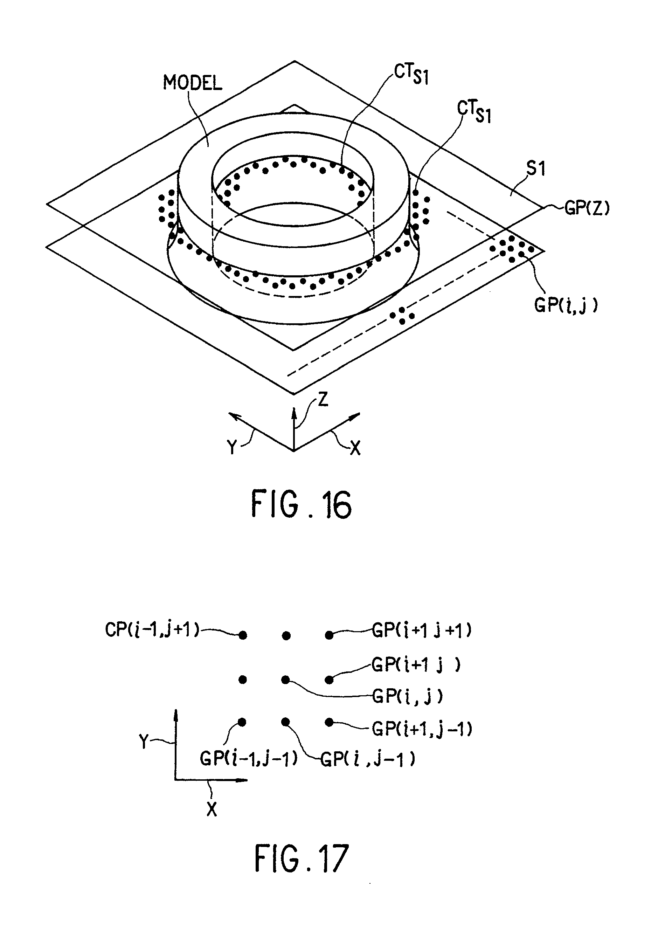

That is, as shown in Fig. 16, a Z coordinate value $Z_{S1}$ of the cut plane S1 is compared first with a Z coordinate value GP(Z) of the grid point GP(i, j) successively, and the grid point GP(i, j) satisfying a relation given as:

$$GP(Z) \leq Z_{S1} \qquad (15)$$

is extracted.

Further as shown in Fig. 17, for grid points GP(i-1, j-1) to GP(i + 1, j + 1) around the extracted grid point GP(i, j), whether or not the grid points GP(i-1, j-1) to GP(i + 1, j + 1) satisfying a relation given as:

$$GP(Z) > Z_{S1} \qquad (16)$$

are present even in one point is decided.

Here, if there is present around even one point of the grid points GP(i-1, j-1) to GP(i + 1, j + 1) satisfying the relation of Eq. (16), then the CPU sets a contour point $CT_{S1}$ having X and Y coordinate values of the grid point GP(i, j) on the cut plane S1.

Thus, in the cylindrical model shown in Fig. 16, when the model is cut by the cut plane S1, the contour point $CT_{S1}$ indicating the contour of a cut face of the model is obtainable.

On the other hand, where there is no point of the grid points GP(i-1, j-1) to GP(i + 1, j + 1) satisfying Eq. (15), a coordinate data (hereinafter called auxiliary data) having a flag indicating that the grid point GP(i, j) is present under the cut plane S1 and also having the X and Y coordinate values of the grid point GP(i, j) is prepared.

Then, as for the grid point GP(i, j) not satisfying Eq. (15), the auxiliary data having a flag indicating that the grid point GP(i, j) is present over the cut plane S1, and also having the X and Y coordinate values of the grid point GP(i, j) is prepared.

In regard to the cut plane S1, when generation of the contour point $CT_{S1}$ and the auxiliary data is completed, the CPU generates a contour point $CT_{S2}$ and the auxiliary data likewise for the continuing cut plane S2.

Thus, the CPU generates contour points $CT_{S1}$ to $CT_{SE}$ and the auxiliary data successively for the cut planes S1, S2, S3, SE.

(3-1) Preparation of one-dimensional machining tool path

When the contour points $CT_{S1}$ to $CT_{SE}$ and the auxiliary data are generated, the CPU of the tool path data generating device 13 shifts to step SP15 to prepare a one-dimensional machining tool path.

The one-dimensional machining refers to a milling operated by means of a flat end mill, wherein the X or Y coordinate value is changed stepwise successively, and the milling is repeated in the direction Y or X, thereby cutting an excess metal remaining from the contour milling.

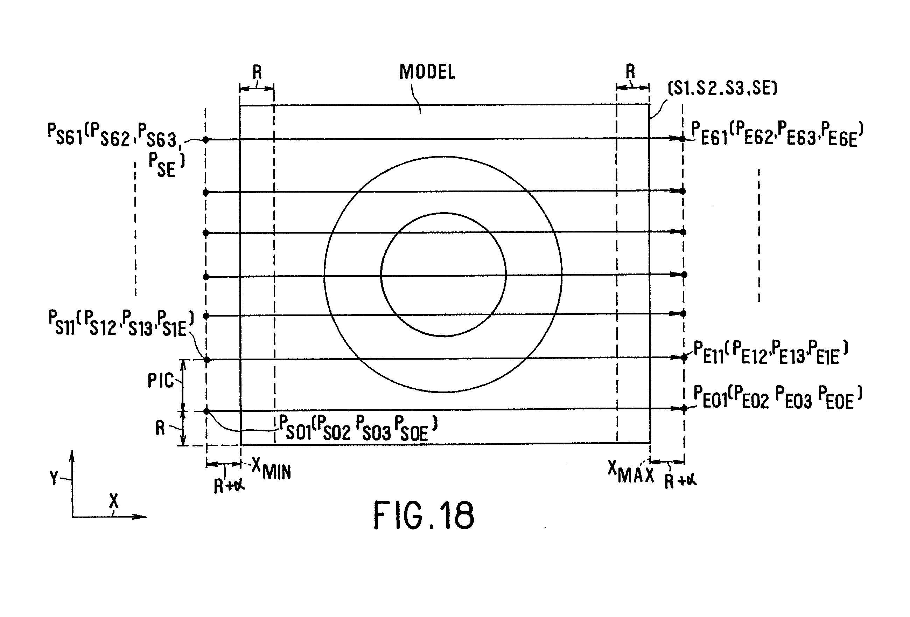

Here as shown in Fig. 18, the CPU sets the entire start points $P_{S01}$, $P_{S02}$, $P_{S03}$, $P_{S0E}$ of the cut planes S1, S2, S3, SE respectively on the cut planes S1, S2, S3, SE, and then sets start points $P_{S11}$, $P_{S21}$, ..., $P_{S12}$, $P_{S22}$, ..., $P_{S13}$, $P_{S23}$, ..., $P_{S1E}$, $P_{S2E}$, ..., and end points $P_{E01}$, $P_{E11}$, ..., $P_{E02}$, $P_{E12}$, ..., $P_{E03}$, $P_{E13}$, ..., $P_{E0E}$, $P_{E1E}$, with reference to the start points $P_{S01}$, $P_{S02}$, $P_{S03}$, $P_{S0E}$.

When the operator inputs the direction X as that for one-dimensional machining, points whereat the Z coordinate value is GP(Z) of the cut planes S1, S2, S3, SE, the X coordinate value is $X_{MIN}$ - $(R + \alpha)$, $\alpha$ being set at 2 mm normally here, and the Y coordinate value is R are set to the entire start points $P_{S01}$, $P_{S02}$, $P_{S03}$, $P_{S0E}$.

On the other hand, the start points $P_{S11}$, $P_{S21}$, ..., $P_{S12}$, $P_{S22}$, ..., $P_{S13}$, $P_{S23}$, ..., $P_{S1E}$, $P_{S2E}$ ... are set at positions displaced from the entire start points $P_{S01}$, $P_{S02}$, $P_{S03}$, $P_{S0E}$ successively in the direction Y by the pickfeed value PIC.

Then the end points $P_{E01}$, $P_{E11}$, ..., $P_{E02}$, $P_{E12}$, ..., $P_{E03}$, $P_{E13}$, ..., $P_{E0E}$, $P_{E1E}$, ... are Y and Z coordinate values equal to the start points $P_{S01}$, $P_{S11}$, ..., $P_{S02}$, $P_{S12}$, ..., $P_{S03}$, $P_{S13}$, ..., $P_{S0E}$, $P_{S1E}$, respectively, and set at positions away from the maximum value $X_{MAX}$ of the coordinate value in the direction X by the distance $R + \alpha$.

Thus, as indicated by an arrow in Fig. 14, the CPU generates tool paths along straight lines connecting the corresponding start points $P_{S01}$, $P_{S11}$, ..., $P_{S02}$, $P_{S12}$, ..., $P_{S03}$, $P_{S13}$, ..., $P_{S0E}$, $P_{S1E}$, ... and the end points.

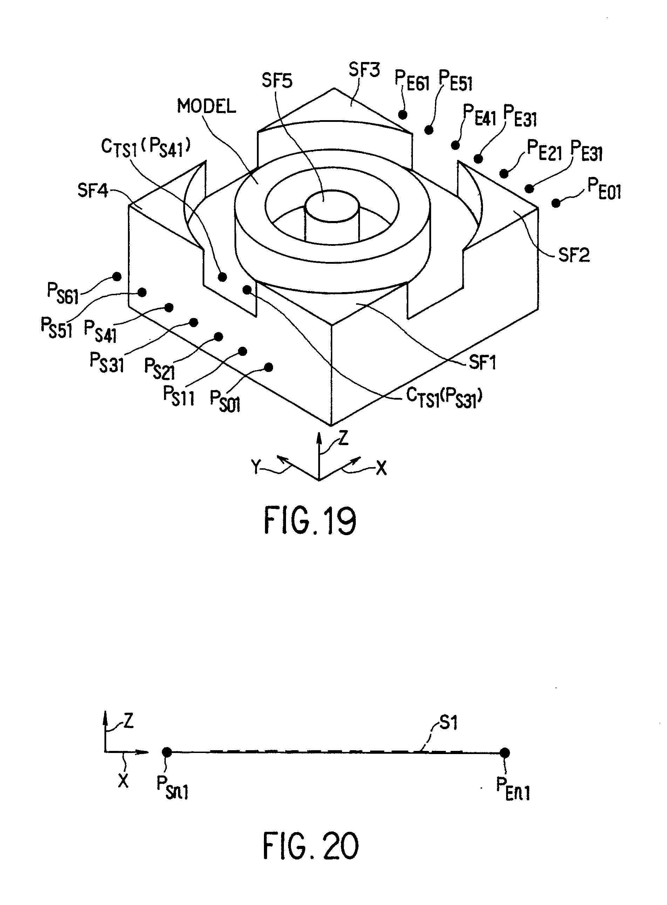

Meanwhile, as shown in Fig. 19, for removing superfluous material after a contour milling by means, for example, of a flat end mill having a large tool radius R, the superfluous material SF1 to SF4 remaining at four corners of a mold and the superfluous material SF5 remaining centrally thereof may be removed.

That is, a one-dimensional machining carried out from the start points $P_{S21}$, $P_{S31}$, $P_{S41}$ toward the end points $P_{E21}$, $P_{E31}$, $P_{E41}$ respectively is capable of resulting in a wasteful move of the tool.

Thus in the embodiment, when the start points $P_{S01}$, $P_{S11}$, ..., to $P_{S0E}$, $P_{S1E}$, ... and the end points $P_{E01}$, $P_{E11}$, ... to $P_{E01}$, $P_{E1E}$, ... are set, the Y coordinate value is equal to the coordinate values of the start points $P_{S01}$, $P_{S11}$, ... to $P_{S0E}$, $P_{S1E}$, ... each, and the X coordinate detects the contour points $CT_{S1}$ to $CT_{SE}$ coming within $X_{MIN}$ to $X_{MIN}$ + R, thus detecting portions whereat superfluous material need not be removed on the side of start points $P_{S01}$, $P_{S11}$, ... to $P_{S0E}$, $P_{S1E}$, ...

When such a contour point $CT_{S1}$ is detected, the CPU resets the start points $P_{S21}$, $P_{S31}$, $P_{S41}$ to the detected contour point $CT_{S1}$.

Thus, in the embodiment, for the portions whereat superfluous material need not be removed on the side of start points $P_{S01}$, $P_{S11}$, to $P_{S0E}$, $P_{S1E}$, the tool path for one-dimensional machining will not be generated, thereby shortening the time for rough machining.

Similarly, from detecting the contour points $CT_{S1}$ to $CT_{SE}$ with the Y coordinate value equal to a Y coordinate value of the end points $P_{E01}$, $P_{E11}$, ..., to $P_{E0E}$, $P_{E1E}$, and the X coordinate value coming at $X_{MAX}$ - R from $X_{MAX}$, the CPU detects portions whereat superfluous material need not be removed on the side of end points $P_{E01}$, $P_{E11}$, ..., to $P_{E0E}$, $P_{E1E}$, ...

Further, when such contour points $CT_{S1}$ to $CT_{SE}$ are detected, end points are reset to the detected contour point $CT_{S1}$, and a wasteful tool path is deleted on the side of the end points $P_{E01}$, $P_{E11}$, ..., to $P_{E0E}$, $P_{E1E}$, .... This shortens the time required for rough machining.

When the start points $P_{S01}$, $P_{S11}$, ..., to $P_{S0E}$, $P_{S1E}$, ... and the end points $P_{E01}$, $P_{11}$, ..., to $P_{E0E}$, $P_{E1E}$, ... are set completely, the CPU retrieves the contour points $CT_{S1}$ to $CT_{SE}$ and the auxiliary data along straight lines connecting the start points $P_{S01}$, $P_{S11}$, ..., to $P_{S0E}$, $P_{S1E}$, ... and the corresponding end points $P_{E01}$, $P_{E11}$, ..., to $P_{E0E}$, $P_{E1E}$, ... successively at every cut places S1, S2, S3, SE.

Here, as described in step SP5, the grid point GP(i, j) is generated at the grid pitch DD with reference to positions of the X and Y coordinate values R, therefore the contour points $CT_{S1}$ to $CT_{SE}$ pass over the grid point in the straight paths connecting the start points $P_{S01}$, $P_{S11}$, ..., $P_{S0E}$, $P_{S1E}$, ... and the corresponding end points $P_{E01}$, $P_{E11}$, ..., $P_{E0E}$, $P_{E1E}$, ..., thus detecting them on the straight paths.

Further in the portions other than the contour points $CT_{S1}$ to $CT_{SE}$, a vertical relation between the cut planes S1 to SE and the model surface can be decided according to the auxiliary data.

From the above relation, the CPU detects the contour points sequentially from the start point $P_{S01}$ toward the end point $P_{E01}$ from the start point $P_{S11}$ toward the end point $P_{E11}$, ... at first in the cut plane S1 which is greatest in Z coordinate.

Here as shown in Fig. 20, in case the contour point $CT_{S1}$ is not detected between the start point $P_{Sn1}$ and the end point $P_{En1}$ along the straight path, the CPU decides whether or not the grid point GP(i, j) is present under the cut plane S1 according to the auxiliary data between the start point $P_{Sn1}$ and the end point $P_{En1}$, and if an affirmative result is obtained here, the straight path connecting the start point $P_{Sn1}$ and the end point $P_{En1}$ is set to a tool path.

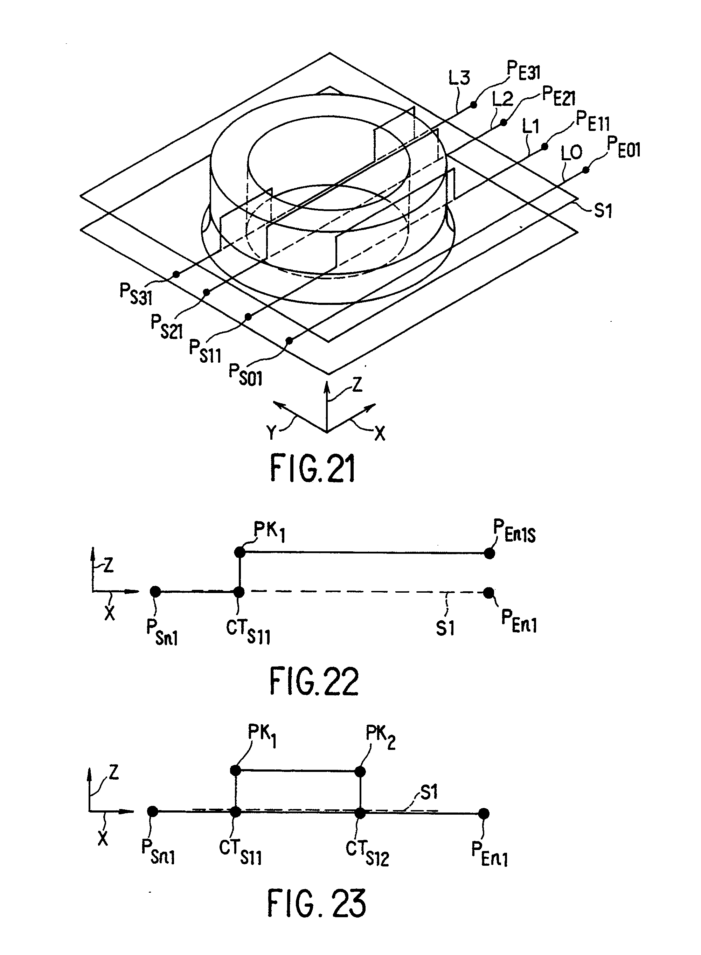

Thus, as shown in Fig. 21, in a straight path LO which is smallest in the Y coordinate value, the flat end mill is moved on the tool path connecting the start point $P_{S01}$ and the end point $P_{E01}$ by a straight line, thereby cutting the excess metal along the straight path LO.

On the other hand, when the contour point $CT_{S11}$ is detected, as shown in Fig. 22, between the start point $P_{Sn1}$ and the end point $P_{En1}$, whether or not the grid point GP(i, j) immediately before is present under the cut plane S1 is decided according to the auxiliary data immediately before the contour point $CT_{S11}$.

If an affirmative result is obtained here, then the CPU sets a reference point $PK_1$ of the tool path over the contour point $CT_{S11}$, and then detects a contour point on a side of the end point $P_{En1}$ from the contour point $CT_{S11}$.

Here, if the contour point is not detected on a side of the end point $P_{En1}$, then the CPU resets an end point $P_{En15}$ over the end point $P_{En1}$, and thus successively generates tool paths connecting the start point $P_{Sn1}$ the contour point $CT_{S11}$, a reference point $PK_{12}$, and the end point $P_{En15}$.

On the other hand, if a contour point $CT_{S12}$ is detected, as shown in Fig. 23, on a side of the end point $P_{En1}$, the CPU then detects a contour point on a side of the end point $P_{En1}$.

If the continuing contour point is not detected here, the CPU sets a reference point $PK_2$ on the contour point $CT_{S12}$, and then generates tool paths connecting successively the start point $P_{Sn1}$, the contour point $CT_{S11}$, the reference point $PK_1$, the reference point $PK_2$, the contour point $CT_{S12}$ and the end point $P_{En1}$.

Thus the tool path along a straight line L1 (Fig. 21) can be generated, and excess metal can be cut along the straight line L1.

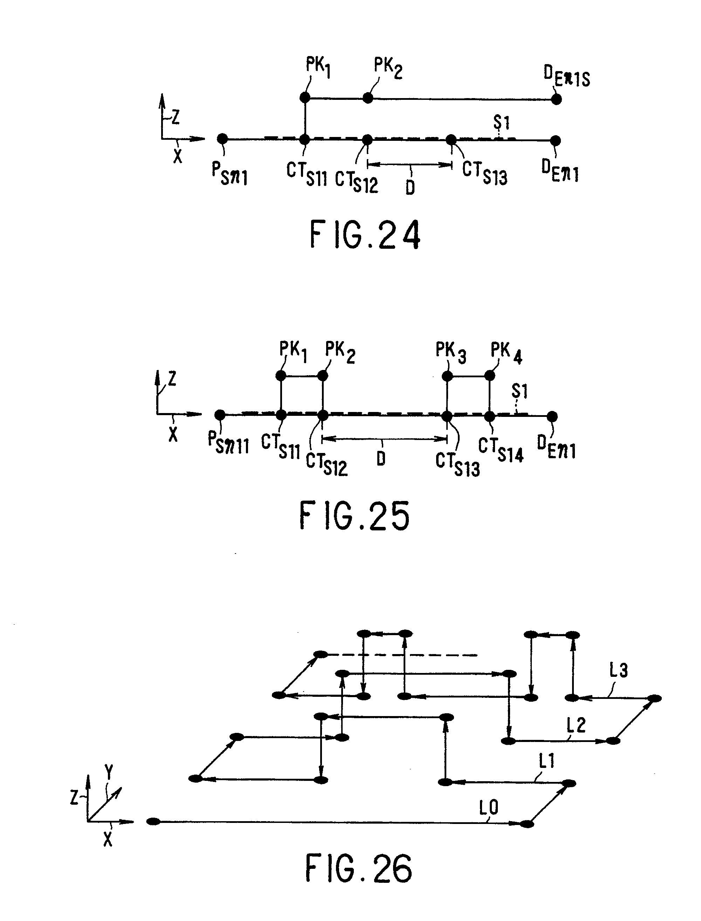

Then as shown in Fig. 24, when a contour point $CT_{S13}$ is detected after the contour point $CT_{S12}$, the CPU detects a distance D from the contour point $CT_{S12}$ to the contour point $CT_{S13}$, stops setting of the reference point $PK_2$ when the distance D is smaller than a diameter 2R of the flat end mill, and detects a contour point continuing from the contour point $CT_{S13}$, as in the case where the contour point $CT_{S12}$ continuing from the contour point $CT_{S11}$ is detected.

Thus in the straight line, like a straight line L2 (Fig. 21) crossing the portion where an excess metal does not remain after contour milling in the recession, a tool path similar to the straight line L1 is generated, and a wasteful vertical move of the ball end mill is prevented to ensure an efficient operation for milling.

On the other hand, as shown in Fig. 25, when the distance D from the contour point $CT_{S12}$ to the contour point $CT_{S13}$ is larger than the diameter of the flat end mill, the CPU sets the reference point $PK_2$ according to the contour point $CT_{S12}$, and then sets a reference point $PK_3$, as in the case where the reference point $PK_1$ is set according to the contour point $CT_{S11}$.

Further the CPU repeats detection of a contour point in the direction from the contour point $CT_{S13}$ to the end point $P_{En1}$, and thus generates a tool path along the straight line L3 (Fig. 21).

Thus in the embodiment, at the time of rough machining in the cut plane S1, the Z coordinate value of the reference points $PK_1$, $PK_2$, is set to a value for which a cutting allowance is added to the Z coordinate value $Z_{MAX}$ of the model, and thus an uppermost surface of the model is ready for machining concurrently.

On the other hand, when the grid point GP(i, j) immediately before the contour point $CT_{S11}$ exists over the cut plane S1 (that is, where the start point is reset as mentioned in Fig. 19) contrary to the case of Fig. 22, a start point is reset on the start point as in the case where the end point is reset.

Further, the contour points are detected successively from the first start point to the end point, and the reference points are set successively, thus generating the tool paths.

Thus, for the cut plane S1, the tool paths can be generated from the entire start point $P_{S01}$ sequentially between the start point and the end point.

Further, when the tool path between the start point and the end point is generated completely for the cut plane S1, the CPU generates the tool paths between the start point and the end point successively for the cut planes S2, S3 and SE likewise.

When the tool paths are generated for the cut planes S1 to SE as above, the CPU generates the whole tool path for one-dimensional machining.

Here, as shown in Fig. 26, first in the cut plane S1, the coordinate data is changed in array for the straight lines L1, L2, L3, even-numbered from the straight line L0, thereby generating a zigzag tool path.

Consecutively the CPU changes the coordinate data likewise for the cut planes S2, S3 and SE, and generates the tool paths also for the cut planes S2, S3 and SE.

In this case, the CPU generates the whole tool path so as to jump over the tool path between the start point and the end point in a portion where excess metal does not remain covering the overall straight line because of, for example, contour milling according to the auxiliary data between the start point and the end point.

Further, from detecting the coordinate data of each start point and the end point, a portion where the start point and end point are reset over the first start point and end point is detected at the portion where the start point and the end point are reset as described with reference to Fig. 19.

The path covering the start point to the next contour point and the path covering a portion of the end point to the contour point immediately preceding the end point comprise a portion where the tool path is generated over the cut plane, therefore the CPU generates the entire tool path by omitting the start point and the end point, thereby preventing a wasteful move of the tool.

(3-2) Preparation of contour milling tool path

Upon generation of the one-dimensional machining tool path, the CPU of the tool path data generating device 13 shifts to step SP16 (Fig. 6), where a tool path for contour milling is generated.

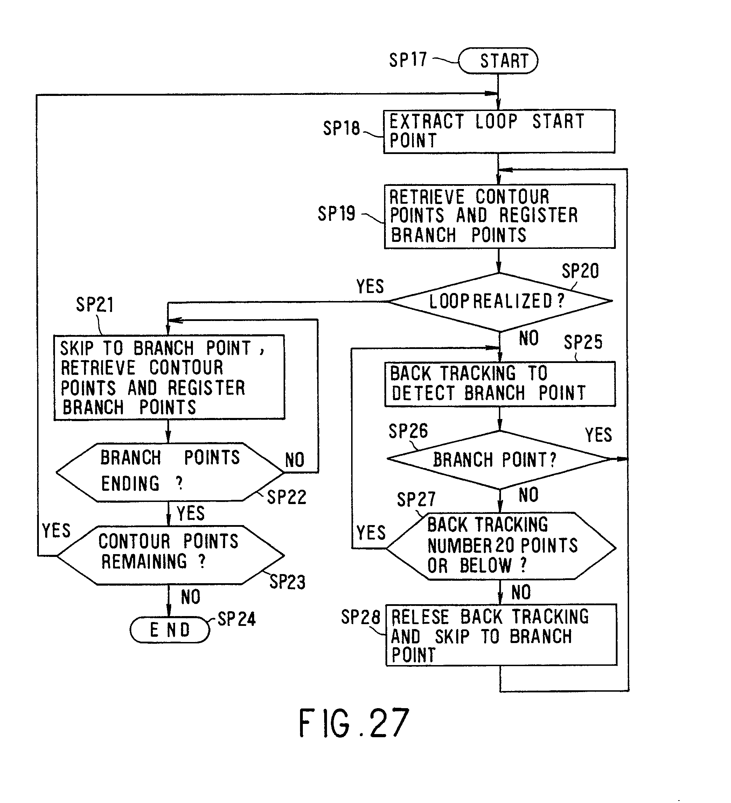

The process comprises detecting a tool path and a drilling position at every cut plane at every cut planes ⇒ at every cut plane S1 to SE by repeating the procedure shown in Fig. 27 with reference to the cut planes S1 to SE.

That is, the CPU shifts to step SP18 from step SP17, and detects a loop start point from the contour points on the cut plane S1.

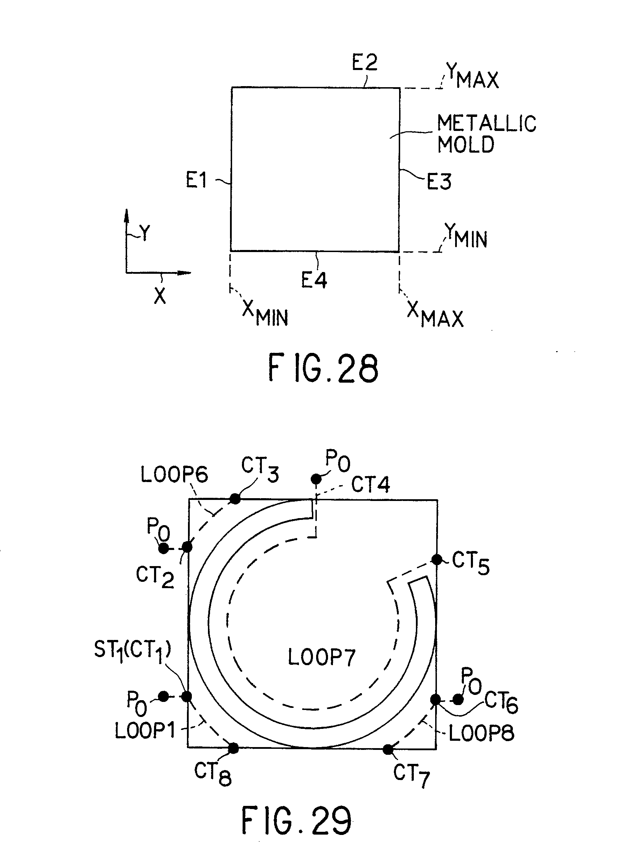

Here, the CPU successively detects the contour points $CT_{S1}$ corresponding to the grid points on an outermost periphery of the model (positioned substantially on the edges E1, E2, E3, E4 of the mold as shown in Fig. 28).

Thus, as shown in Fig. 29, when the contour point $CT_1$ is detected in one, the CPU sets the contour point $CT_1$ to a loop start point $ST_1$.

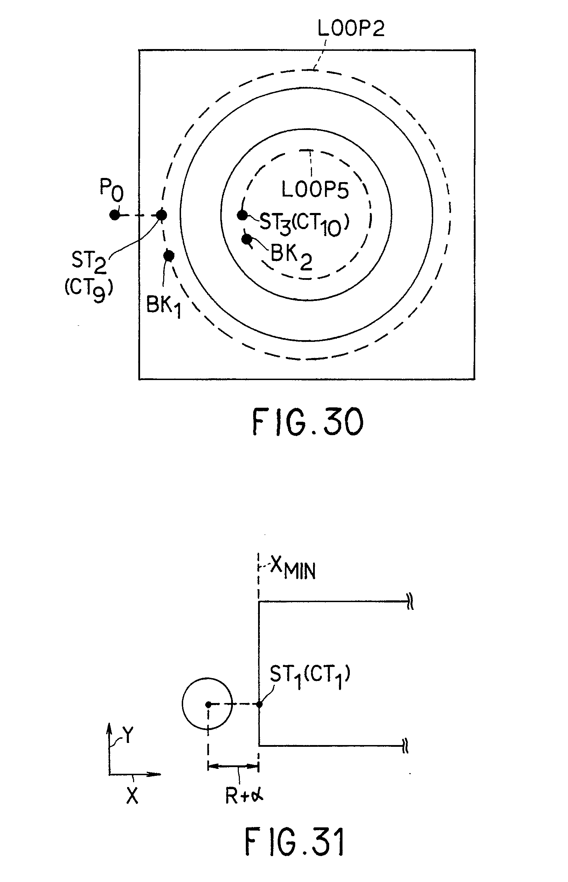

On the other hand, when a contour point is not detected from the grid points on the outermost periphery, as shown in Fig. 30, the CPU extracts the contour point having the smallest X coordinate value from among the contour points of the cut plane S1, then extracts a contour point $CT_9$ having the smallest Y coordinate value from the extracted contour point, and sets the contour point $CT_9$ to a loop start point $ST_2$.

Further, when the loop start point is detected in at least one, the CPU decides whether or not the detected loop start point must be subjected to drilling.

Here, the CPU decides that the loop start point $ST_1$ detected from the grid points on the outermost periphery need not be subjected to drilling.

In this case, when the start point $ST_1$ is detected from the grid points of the X coordinate value $X_{MIN}$, as shown in Fig. 31, the CPU sets the point away from the start point $ST_1$ to a negative side of the direction X by the distance $R + \alpha$ as a start point $P_0$ for contour milling, and then shifts to step SP19.

On the other hand, when a start point $CT_5$ is detected from the grid points of the X coordinate value $X_{MAX}$, the CPU sets the point away from the start point $CT_5$ to a positive side of the direction X by the distance $R + \alpha$ as a start point for contour milling, and then shifts to step SP19.

Further, in case a start point $CT_7$ or $CT_3$ is detected from the grid points of the Y coordinate value $Y_{MIN}$ or $Y_{MAX}$, the CPU sets the point away from the start point $CT_3$ to a negative side of the direction Y by the distance $R + \alpha$ or the point away from the start point $CT_7$ to a positive side of the direction Y by the distance $R + \alpha$ as a start point for contour milling, and then shifts to step SP19.

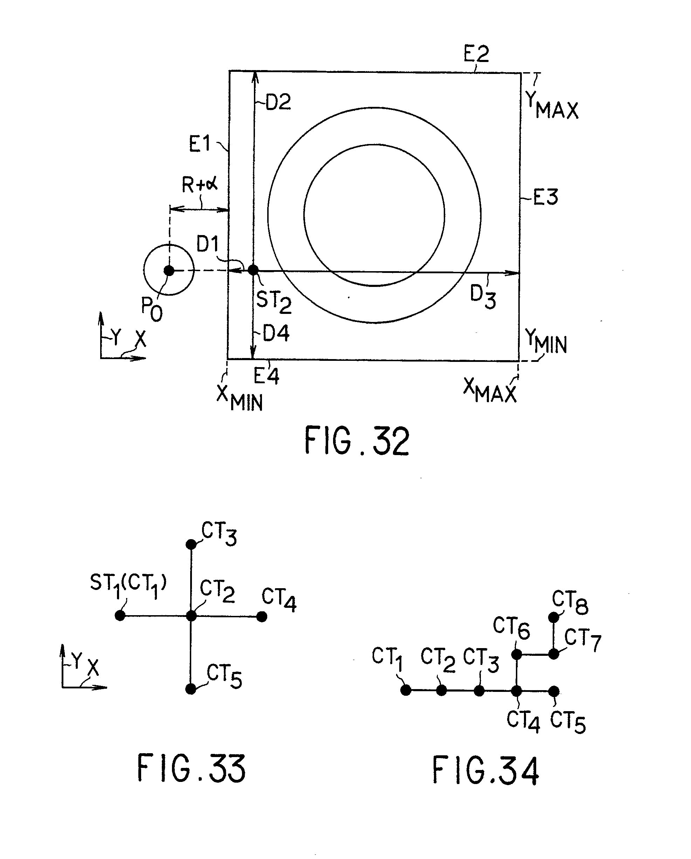

Meanwhile, in regard to a loop start point $ST_2$ detected from those other than the grid points on the outermost periphery, distances D1, D2, D3, D4 as far as the outermost periphery of the model are detected, as shown in Fig. 32, for straight lines extending each in the directions X and Y from the loop start point $ST_2$.

Further, the auxiliary data is retrieved along each straight line in the order of the shortest distance, and whether or not the cut plane S1 on the straight line comes over the model surface is decided.

Here, when it is decided that the cut plane S1 comes over the model surface, a retrieval of the auxiliary data is ended, the entire start point $P_0$ for contour milling wherefore the flat end mill is advanced as far as the loop start point $ST_2$ is set on an extension of the straight line (a straight line of the distance D1 being detected in this case) away from an outermost form of the model by the distance $R + \alpha$, and then the CPU shifts to step SP19.

On the other hand, in all the straight lines, when the cut plane S1 comes below the model surface, the CPU decides that the loop start point $ST_2$ is a position necessary for drilling, thus sets the loop start point $ST_2$ to a drilling point, and then shifts to step SP19.

Thus, for the loop start point $ST_2$, whether or not the flat end mill can be advanced from an outermost periphery of the model can be decided easily according to the auxiliary data with reference to the grid points, and thus the drilling position can be set easily and automatically.

The CPU then retrieves contour points successively with reference to the detected loop start point $ST_1$ - ($CT_1$) in step SP19.

As shown in Fig. 33, the retrieval is a process for detecting successively the adjacent contour points $CT_2$, $CT_3$, $CT_4$, from the loop start point $ST_1$ ($CT_1$), connecting the contour points in the detected order to generate a tool path beginning from the loop start point $ST_1$.

In the CPU in this case, the contour points once retrieved are excluded from the ensuing retrieval, thereby generating tool paths for contour milling.

In this case each contour point comprises a point indicating a contour of the model generated according to a result obtained from comparing the grid point and the cut plane, therefore from generating the tool paths by connecting the adjacent contour points, overcutting will effectively be avoided to generate the tool paths for contour milling.

That is, in the cylindrical model as described with reference to Fig. 32, the contour points can be detected in sequence along a sectional form of the model, thus generating a tool path for the outer periphery of the model.

Then in the model as mentioned with reference to Fig. 29, the tool path for the outer periphery of the model can be generated from the loop start point $ST_1$ to a contour point $CT_8$.

Further in case the contour points are retrieved there the contour points $CT_3$, $CT_4$ not yet retrieved abut more than one on a single contour point $CT_2$. One contour point $CT_3$ or $CT_4$ of them is selected and the ensuing contour points are retrieved in the CPU, and the contour point $CT_4$ or $CT_3$ not selected is registered as a branch point.

Thus, as shown in Fig. 34, when the contour points $CT_2$, $CT_3$ are retrieved successively from the contour point $CT_1$ side, and the contour points $CT_5$ and $CT_6$ abut on the contour point $CT_4$, the contour points $CT_2$, $CT_3$, $CT_4$, $CT_5$ are retrieved in sequence from the contour point $CT_1$, and then the retrieval is turned back at the contour point $CT_5$, thus generating a tool path in the order of the contour points $CT_5$, $CT_4$, $CT_6$, $CT_7$, $CT_8$.

Here, if the adjacent contcur points not yet retrieved cannot be detected, then the CPU shifts to step SP20, and decides whether or not a loop is realized with reference to the loop start point $ST_1$ ($CT_1$) retrieved in step SP19.

Where the contour point $CT_8$, which cannot be retrieved finally, and the loop start point $ST_1$ ($CT_1$) are grid points on an outermost periphery of the model both (Fig. 29), the CPU sets the contour point $CT_8$ to an end point to decide that the loop beginning from the loop start point $ST_1$ is realized, and then shifts to step SP21.

Thus, the contour points continuing from the loop start point $ST_1$ will be retrieved successively to obtain a loop LOOP1, thereby subjecting the model to a contour milling through tool paths of the loop LOOP1.

Further, when the last contour point which cannot be retrieved coincides with loop branch points $BK_1$, $BK_2$ (Fig. 30), the CPU sets the contour point to an end point to decide that loops LOOP2, LOOP5 beginning from the loop start points $P_0$, $ST_3$ are realized, and then shifts to step SP21.

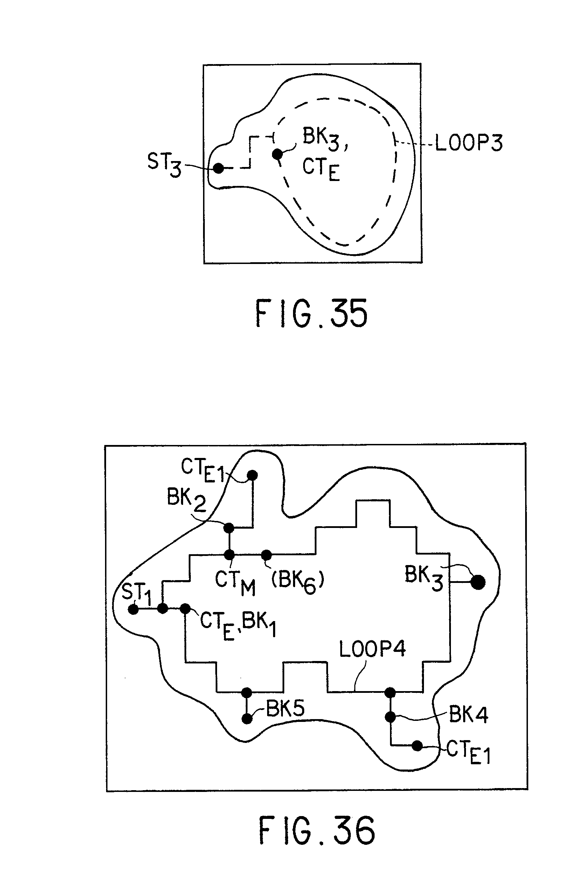

Thus, as shown in Fig. 35, the model is recessed as a whole and grooved partly, and in case a flat end mill for rough machining coming into such grooved portion is not for overcutting, a contour point is generated on the grooved portion according to the grid point.

Further, when the contour point on an extreme end of the grooved portion is detected as a start point $ST_3$, contour points are retrieved successively from the start point $ST_3$, and after a branch point $BK_3$ is registered, the contour points are retrieved along an inside of the model, and thus the contour point not yet registered cannot be detected at the branch point $BK_3$ after all.

Accordingly, the CPU sets the last contour point which cannot be retrieved as an end point in this case, decides that a loop LOOP3 beginning from the loop start point $ST_3$ is realized, and then shifts to step SP21.

Here, the CPU retrieves the contour points not yet registered successively from the remaining branch point as in the case where contour points are retrieved successively from the start point in step SP19.

That is, as shown in Fig. 36, there may be a case where a retrieval is commenced from the start point $ST_1$, branch points $BK_1$, $BK_2$, $BK_3$, $BK_4$, $BK_5$ are detected successively, and a loop LOOP4 with the branch point $BK_1$ as an end point is realized.

In the branch points $BK_2$, $BK_3$, $BK_4$, $BK_5$ in this case, there are present contour points not yet retrieved which are adjacent to the branch points $BK_2$, $BK_3$, $BK_4$, $BK_5$, and hence a rough machining can be furthered in a groove from the branch points $BK_2$, $BK_3$, $BK_4$, $BK_5$.

Accordingly in the embodiment, when the loop LOOP4 is realized from retrieving contour points further from the remaining branch points $BK_2$, $BK_3$, $BK_4$, $BK_5$, a tool path for rough machining will be generated for such grooved portion.

That is, the CPU sets the branch point $BK_2$ as a start point, then retrieves contour points not yet searched from the start point, thus generating tool paths branched from the loop LOOP4 and reaching an end point CTE1.

In this case, when the branch point is detected again, the CPU registers it to process similarly the remaining branch points.

Consecutively the CPU shifts to step SP22, decides whether or not contour points are retrieved for all the branch points in the loop LOOP4, and returns to step SP21 as a negative result is obtained in this case.

Thus the CPU repeats the procedure covering steps SP21 - SP22 - SP21 thereby generating tool paths successively for the branch points $BK_2$, $BK_3$, $BK_4$, $BK_5$ of the loop LOOP4.

On the other hand, when the contour points are retrieved completely for all the branch points $BK_2$, $BK_3$, $BK_4$, $BX_5$, an affirmative result is obtained in step SP22, and the CPU shifts to step SP23.

Here the CPU decides whether or not the contour points remain unretrieved on the cut plane S1, and if an affirmative result is obtained here, then it returns to step SP18 to set a loop start point for the remaining contour points.

Thus, in the cylindrical model (Fig. 30), from repeating steps SP18 - SP19 - SP20 - SP21 - SP22 - SP23 - SP18, a tool path for the loop LOOPS is generated consecutively to the loop LOOP2 beginning from the start point $P_0$ for contour milling, and a start point $CT_{10}$ for the loop LOOP5 is set as a drilling point.

Then, in the model described with reference to Fig. 29, loops LOOP1, LOOP6, LOOP7 and LOOP8 beginning from the start point $P_0$ for contour milling are each detected successively, and tool paths for the loops LOOP1, LOOP6, LOOP7, LOOP8 are thus generated.

A negative result is then obtained in step SP23, and the CPU shifts to step SP24 to END the procedure.

On the other hand, in a retrieval of the contour points in step SP19, when, for example, the contour point $CT_{E1}$ side is selected at a contour point $CT_M$ (Fig. 36), and a branch point $BK_6$ is registered, contour points adjacent to the contour point $CT_{E1}$ cannot be detected.

In this case, the contour point $CT_{E1}$ is set as an end point, and both edge and branch points are not coincident, therefore in step SP20, the CPU decides that a loop is not realized, and thus shifts to step SP25.

Here the CPU proceeds backward to the path retrieved from the contour point $CT_{E1}$ (called backtrack hereinafter), and decides whether or not adjacent to the branch point in step SP26.

Here, if a negative result is obtained, the CPU shifts to step SP27 to decide whether or not the distance backtracked covers 20 or less contour points.

If a negative result is obtained here, the CPU returns to step SP25, backtracks again, and then shifts to step SP26 to decide whether or not the contour point is adjacent to the branch point.

Thus from repeating the process of steps SP25 - SP26 - SP27 - SP25, the CPU backtracks in the range of 20 points in the number of contour points to retrieve the branch point.

Here when a contour point $CT_M$ adjacent to the branch point $BK_6$ in the backtracking range of 20 points is detected, the CPU returns to step SP19 and shifts to the branch point $BK_6$ to retrieve the contour point adjacent thereto.

Further in this case, the CPU generates a tool path as backtracking, then generates a tool path in the order from the contour point $CT_M$ to the branch point $BK_6$, thus shifting the tool once from the contour point $CT_M$ to the contour point $CT_{E1}$, and then shifts backward from the contour point $CT_{E1}$ to the contour point $CT_M$ to generate a tool path running toward the branch point $BK_6$.

Thus in the embodiment, even in case a loop cannot be generated at first, a contour milling can securely be effected.

On the other hand, when the contour point $CT_M$ adjacent to the branch point cannot be detected in a backtracking range of 20 points, a negative result is obtained in step SP27, and the CPU shifts to step SP28.

Here the CPU registers the contour point $CT_{E1}$ as an end point, and then skips to the branch point $BK_6$ to retrieve the adjacent contour point.

Thus, after shifting the tool along contour points from the contour point $CT_M$ to the contour point $CT_{E1}$ the CPU suspends the cutting once at the end point $CT_{E1}$, and generates a tool path for the cutting to commence from the branch point $BK_6$.

That is, in a practical contour milling, the tool must be moved in a fine path, in most cases, like a path from the contour point $CT_M$ to the contour point $CT_{E1}$ with reference to the loop LOOP4.

In such a fine path, the moving distance from the contour point $CT_M$ is short in most cases, and if so, then the whole rough machining hours can be shortened reasonably by carrying out a rough machining after backtracking as compared with the case where the cutting is interrupted from drawing up the flat end mill once.

When the backtracking distance is, however, long, the flat end mill is drawn up to interrupt the cutting, and then the flat end mill will be moved at high speed to the position to start the next cutting, thereby shortening the machining hours as a whole.

Accordingly, the branch point is retrieved in the range of 20 points, and a rough machining is carried out after backtracking according to a result obtained through retrieval. Then a shift of the tool can be changed according to the length of the path from the contour point $CT_M$ to the contour point $CT_{E1}$, thus shortening the time required for the rough machining.

Thus a tool path for contour milling can be generated at every loop with reference to the cut plane S1, and consecutively the CPU generates the tool path for contour milling for the entire cut plane S1

That is, the CPU connects the start point and the end point of each loop in the order of detection, thereby generating a tool path for the entire cut plane S1.

Then, in each loop, grid points are generated so as not to cause overcutting with the split points indicating a form of the model as a standard, and the tool path is generated with the grid points as a standard; therefore, overcutting can be prevented, and the contour milling is smooth.

Further in this case, since a form of the model is represented by means of the split points, the tool path can be generated with a precision which is sufficient in practice and in a short time.

When the tool path for contour milling is generated for the entire cut plane S1, the CPU executes the process of Fig. 27 for the cut planes S2, S3, SE, thus generates tool paths for contour milling successively for the cut planes S2, S3, SE, and ends the process of step SP16 (Fig. 2).

In the embodiment, a reference point PK formed on the contour point is represented by flagging data of the detected contour points.

(3-3) Generation of machining data

When the tool path for contour milling is generated, the CPU shifts to step SP29, where machining data for one-dimensional machining and contour milling is generated.

Here the CPU generates the machining data repeating in the order of drilling, contour milling and one-dimensional machining successively for the cut planes S1, S2, S3 and SE in that order.

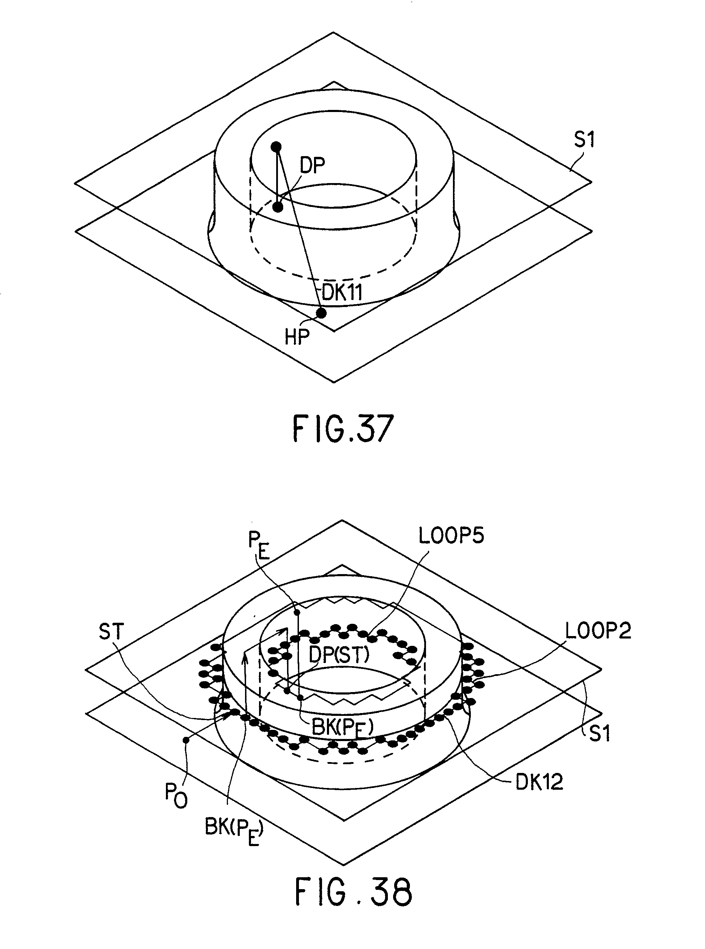

That is, as shown in Fig. 37, where a drilling point DP is set for the cut plane S1 in step SP16, a command to specify a drill of the tool radius R, a Z coordinate value of the cut plane S1, a command for drilling rate and others are added to the coordinate data of the drilling point DP, thereby preparing NC data for drilling.

Thus, after installing a drill of the tool radius at a predetermined reference position HP according to the NC data, the drill is shifted along a tool path DK11 to drill the drilling point DP as deep as the cut plane S1.

The CPU then adds a command to specify a flat end mill of the tool radius A, a coordinate value of the cut plane S1, a command for a drilling rate and others to the coordinate data of the contour milling tool path detected with reference to the cut plane S1 in step SP16, thus generating the NC data for contour milling.

As shown in Fig. 38, the flat end mill can be shifted along a tool path DK12 according to the NC data, and after milling from the entire start point $P_0$ of the cut plane S1 to a start point ST of the loop LOOP2, the loops LOOP2 and LOOP5 are subjected to milling along a contour of the model.

In the CPU in this case, the flat end mill is drawn up from an end point PE of the loop LOOP2 to a home position and then shifted over a start point of the loop LOOP5. Meanwhile, a command of the NC data is changed so as to change the moving rate of the flat end mill, thus shortening the rough machining hours.

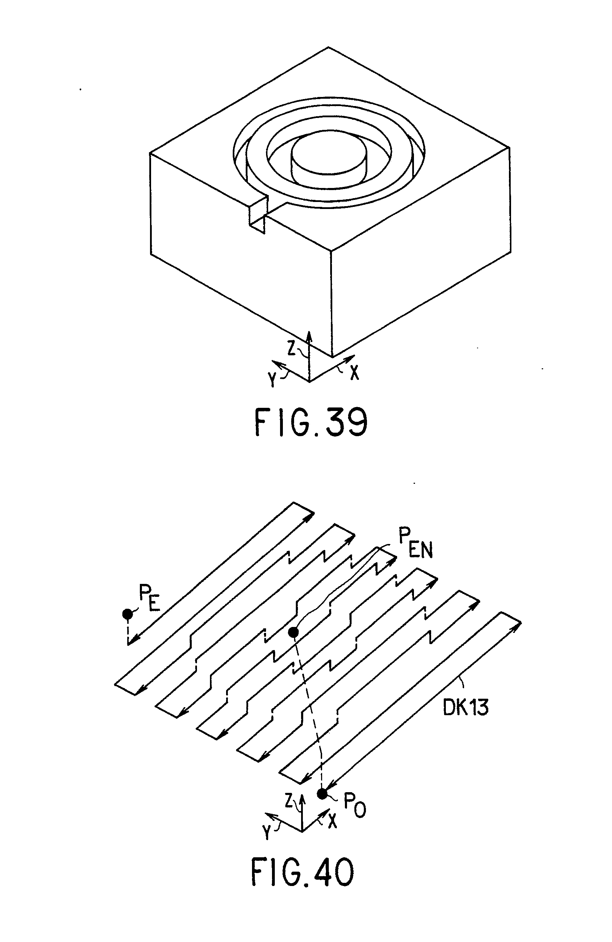

Thus, as shown in Fig. 39, a contour milling is realized on a predetermined metallic mold in an outline form of the model according to the NC data.

The CPU then generates the NC data according to the one-dimensional machining tool path detected in step SP15.

That is, as in the case of contour milling, the CPU adds a command to specify a flat end mill of the tool radius R, a Z coordinate value $Z_{MAX}$ of the model, a command for cutting rate and others to the coordinate data of the one-dimensional machining tool path, thereby generating the NC data.

Thus, as shown in Fig. 40, the flat end mill can be shifted along a tool path DK13, and as Y coordinate values successively change stepwise, excess metal can be removed in the direction X.

In this case, the CPU sets a Z coordinate value of the flat end mill for cutting an uppermost surface of the model, cuts the uppermost surface of the model simultaneously with the cut plane S1, and thus shorten the machining hours accordingly.

Further, when the end mill is shifted upward and also shifted from the end point for contour milling to the entire start point $P_0$ for the one-dimensional machining (comprising a path indicated by a broken line), the command for the moving rate is changed for the flat end mill to shift at high speed, thereby shortening the rough machining hours.

Thus, the surface coming upward from the cut plane S1 can be subjected to a rough machining according to the NC data generated for drilling, contour milling and one-dimensional cutting.

Similarly, the CPU successively generates the NC data for drilling, contour milling, one-dimensional machining with reference to the cut planes S2, S3, SE, thereby generating a rough machining data.

In this case, while the uppermost surface of the model is subjected to cutting concurrently in the one-dimensional cutting of the cut plane S1, the CPU draws up the flat end mill to a home position to shift at high speed in the one-dimensional machining of the cut planes S2, S3, SE, thereby shortening the entire machining hours.

On the other hand, where the drilling point has not been detected in step SP16, the NC data for contour milling and one-dimensional machining is generated in the order of the cut planes instead of the NC data for drilling.

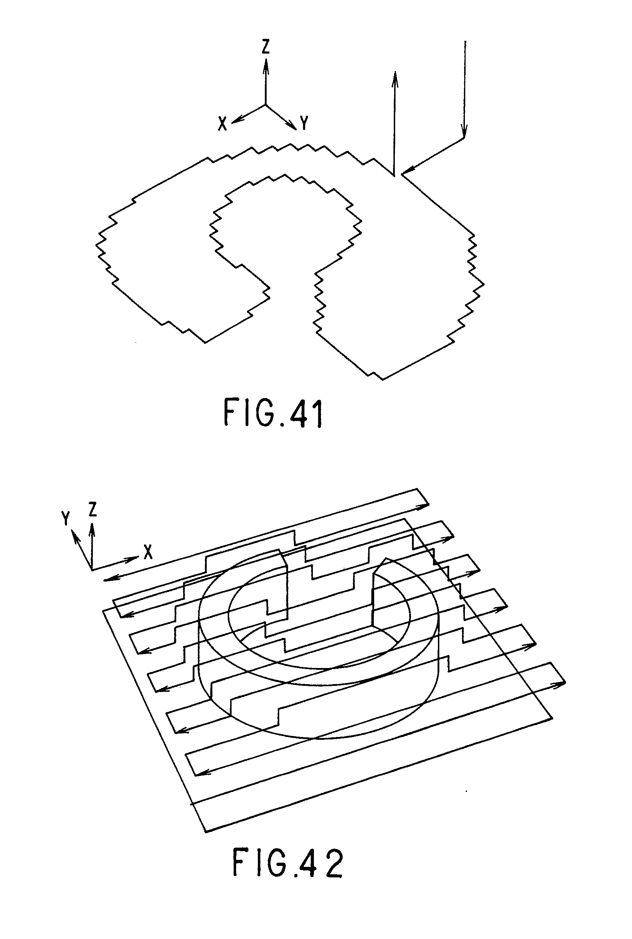

Thus, in the model described hereinabove with reference to Fig. 29, NC data for shifting the flat mill through a path shown in Fig. 41 and Fig. 42 is generated for each cut plane, thus carrying out drilling automatically as the occasion demands.

When the machining data DTCL is generated completely, the CPU shifts to step SP30 to end the procedure, and then stores the machining data in the floppy disk 15 (Fig. 4) in accordance with the operation by the operators.

Thus in the NC milling machine 14, the metallic mold can be subjected to rough machining according to the machining data $DT_{CL}$, and hence the metallic mold of a product represented by a form data $DT_S$ can now be finished in a few short machining hours.

## (4) Advantage of the embodiment

According to the aforementioned construction, a gridiron of grid points according to a tool radius is generated from a plurality of split points indicating the form of the model, rough machining data for contour milling is generated from comparing the grid points and coordinate value of the cut plane, and thus overcutting is avoided to effectively obtain the rough machining data for contour milling.

In this case, contour points indicating a sectional contour of the model are generated from comparing the grid point and the coordinate value of the cut plane, and one of the contour points not for cutting from around the model is set as a drilling position, therefore the drilling position can be set automatically, and rough machining data for contour milling can be generated simply.

Further in this case, from generating a tool path in such manner as will connect adjacent contour points successively, machining data for contour milling can be generated simply.

## (5) Other embodiments

(5-1) In the aforementioned embodiment, the description has referred to the case where a maximum distance $R_K$ of the split points is set to 1/3 of the tool radius R, however, the invention is not necessarily limited thereto, and hence it may be set, for example, to 1/2 of the tool radius R.

In this case, the correction value $\Delta R$ of Eq. (12) may be set to a value obtained as:

$$\Delta R = \sqrt{R^2 - \left(\frac{R}{2 * 2}\right)^2} \qquad (17)$$

(5-2) Further in the aforementioned embodiment, the description has referred to the case where a loop start point is set for the contour points coming on an outermost periphery of a model, and then the contour point with the minimum Y coordinate value is set as the loop start point from among the contour points with the X coordinate value being a minimum value, however, the invention is not necessarily limited thereto, and a process for detecting the loop start point on the outermost periphery of the model may be omitted.

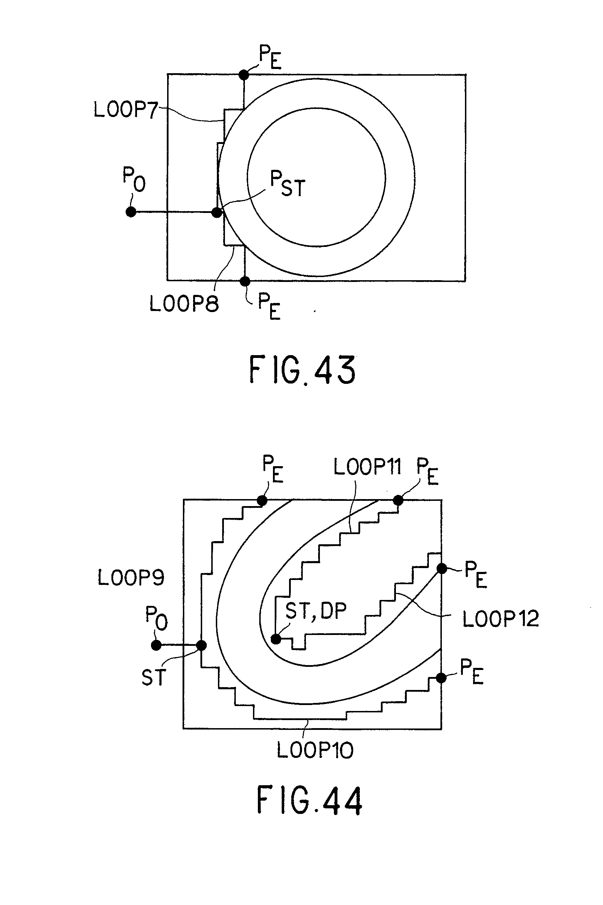

In this case, for example, in the cylindrical model shown in Fig. 43, the left side surface may be subjected to a rough machining by the two loops LOOP7 and LOOP8.

Then, in the model shown in Fig. 44, the outside surface may be subjected to a rough machining by two loops LOOP9 and LOOP10, and the inside surface may be subjected to a rough machining by two loops LOOP11 and LOOP12 after drilling at the drilling point DP.

Further in this case, the cutting order of the loops LOOP7 and LOOP8, and the loops LOOP9 and LOOP10 may be reversed so as to shorten the moving distance of the tool.

(5-3) Further, in the aforementioned embodiment, the description has referred to the case where the contour point with the Y coordinate value being a minimum value is set as a loop start point from among the contour points with the X coordinate value being a minimum value, however, the invention is not necessarily limited thereto, and hence, for example, the contour point with the X coordinate value being a minimum value may be set as a loop start point, as occasion demands, from among the contour points with the Y coordinate value being a minimum value.

(5-4) Further, in the aforementioned embodiment, the description has referred to the case where the model uppermost surface is cut concurrently with a one-dimensional machining of the cut plane S1, however, the invention is not necessarily limited thereto, and hence the model uppermost surface may be cut particularly.

(5-5) Further in the aforementioned embodiment, the description has referred to the case where a one-dimensional machining is applied in the direction X, however, the invention is not necessarily limited thereto, and the one-dimensional machining may be applied in the direction Y as the occasion demands.

(5-6) Further in the aforementioned embodiment, the description has referred to the case where a rough machining is applied on a flat end mill, however, the invention is not necessarily limited thereto, and hence is applied extensively to the case where, for example, a ball end mill is used therefor.

(5-7) Further in the aforementioned embodiment, the description has referred to the case where a model with a free curved surface given by a cubic Bezier expression is subjected to a rough machining, however, the invention is not necessarily limited thereto, and hence is applied extensively to the case where a model with free curved surface given by Coons expression, Ferguson expression and others is subjected to a rough machining, and further to the case where not only a model with a free curved surface but also a model indicated by various form data are subjected to a rough machining.

In the invention in this case, since the form of the model is represented by split points, rough machining data can be generated easily and securely even when each patch is not connected smoothly.

(5-8) Still further, in the aforementioned embodiment, the description has referred to the case where a metallic mold is subjected to rough machining, however, the invention is not necessarily limited thereto, and hence is applicable extensively to the case where, for example, a prototype is subjected to rough machining.

While there have been described certain preferred embodiments of the invention, it will be obvious to those skilled in the art that various changes and modifications may be made therein without departing from the invention, and it is aimed, therefore, to cover in the appended claims all such changes and modifications as fall within the true spirit and scope of the invention.

### Claims

1. A method for generating data defining the machining depth along a tool path for a numerically controlled machine (14) of the type having a machining tool of a known configuration using form data defining a three-dimensionally curved surface, comprising the steps of:

   forming a plurality of split points (P(i,j)S) which indicate roughly a three-dimensionally curved surface according to the form data,

   forming a plurality of grid points (GP(i,j)) which are displaced in the horizontal direction repeatedly at a predetermined pitch and which indicate depth data to prevent an overcutting in the depth direction, the depth data being calculated for the plurality of split points and a tool radius (R) of an end mill composing the machining tool, and

   forming rough machining data for contour milling which is generated by comparing the depth data of the plurality of split points and predetermined depth values of a plurality of cut planes.

2. A method for generating data defining the machining depth along a tool path according to claim 1,

   wherein the step of forming the rough machining data includes forming a plurality of contour points which indicate a contour obtained from cutting the three-dimensionally curved surface by the cut planes (Si), and further including the steps of

   forming a moving path of the machining tool according to continuing sequentially the plurality of contour points.

3. A method for generating data defining the machining depth along a tool path according to claim 2,

   wherein the step of forming the plurality of contour points includes detecting a plurality of first contour points for contour milling from around a machining target and a plurality of second contour points to not be around the machining target and to not be the first contour points for contour milling, the plurality of first contour points and the plurality of second contour points being detected sequentially, and selecting one of the plurality of second contour points as a start point for drilling.

4. A method for generating data defining the machining depth along a tool path according to claim 2, wherein the formation of a moving path of the machining tool comprises the steps of: retrieving sequentially one of the contour points according to an adjacent contour point, and forming a moving path (Li) of the machining tool according to the result of the retrieval.

## FIG.1 (PRIOR ART)

## FIG.2 (PRIOR ART)

EP 0 459 251 A1

FIG.3 (PRIOR ART)

FIG.4 (PRIOR ART)

20

<u>10</u>

```
┌─────────────────┐
│  FREE SURFACE   │──12
│   GENERATING    │
│    DEVICE       │
└─────────────────┘
         │
         │ ⌐DT_S
         ▼
┌─────────────────┐        DT_DSP      ╭─────────────╮
│ TOOL PATH DATA  │───────────────────▶│  DISPLAY    │──16
│   GENERATING    │                    │   UNIT      │
│    DEVICE       │──13                ╰─────────────╯
│                 │◀──────────────────┌─────────────┐
└─────────────────┘                   │INPUT DEVICE │──17
         │  ⌐DT_CL              DT_IN  └─────────────┘
         ▼
     ┌───────┐
     │  ◯    │──15
     └───────┘
         ┊
         ▼
┌─────────────────┐
│   NC MILLING    │──14
│    MACHINE      │
└─────────────────┘
```

# FIG.5

START ~SP1

~SP2
GRID POINTS FOR FLAT END MILL AVOIDING A TOOL INTERFERENCE ARE GENERATED.

~SP12
A PICKFEED VALUE IS INPUTTED, AND A PLANE ON WHICH TO CARRY OUT CONTOUR MILLING IS SET ACCORDING THERETO.

~SP13
A PICKFEED OF A TOOL PATH FOR ONE-DIMENSIONAL CUTTING FOR REMOVING EXCESS METAL AFTER CONTOUR MILLING IS DECIDED.

~SP14
A GROUP OF POINTS INDICATING A CONTOUR OF A MODEL FORM ARE EXTRACTED FROM AMONG GRID POINTS AT EVERY PLANE.

~SP15
A ONE-DIMENSIONAL MACHINING TOOL PATH FOR REMOVING EXCESS METAL AFTER CONTOUR MILLING IS GENERATED BY MEANS OF THE POINT GROUP INDICATING THE FORM CONTOUR. EITHER ONE DIRECTION OF X OR Y IS SELECTED FOR MACHINING.

~SP16
A LOOP IS GENERATED FROM THE POINT GROUP INDICATING THE FORM CONTOUR, AND WHETHER OR NOT A GROUP OF THE LOOPS THUS GENERATED INDICATES A CONTOUR OF A POCKET FORM IS DISCRIMINATED.
IF SO, THEN A START POINT OF THE LOOPS IS EXTRACTED AS A DRILLING POINT. BUT IF A CONTOUR OF AN ISLAND PORTION IS DISCRIMNATED THEN DATA FOR CARRYING OUT CUTTING FROM AN EDGE OF THE MODEL NEAREST FROM THE LOOP START POINT TO THE LOOP START IS GENERATED.

~SP29
EACH DATA FOR DRILLING (WHERE NECESSARY ONLY), CONTOUR MILLING AND ONE-DIMENSIONAL MACHINING IS CONVERTED INTO A MACHINING DATA.

END ~SP30

FIG.6

```
                    ( START )~ SP3
                          │
                          ▼                              SP4
┌────────────────────────────────────────────────────────────┐
│ EACH PATCH IS DIVIDED BY A SPECIFIED DIVISION NUMBER IN THE  │
│ DIRECTIONS X AND Y, AND IS REPRESENTED AS A POINT DATA. IN THIS│
│ CASE A MAXIMUM VALUE OF THE DISTANCE BETWEEN TWO POINTS IN EACH│
│ PATCH IS DEFINED AND FOR THE PATCH WITH THE DISTANCE BETWEEN TWO│
│ POINTS EXCEEDING THE RANGE, A DIVISION NUMBER SATISFYING A    │
│ DESIRED RANGE IS CALCULATED AUTOMATICALLY, AND THE PATCH IS   │
│ REDIVIDED.                                                    │
└────────────────────────────────────────────────────────────┘
                          │
                          ▼                              SP5
┌────────────────────────────────────────────────────────────┐
│ AN INTERVAL(GRID PITCH) BETWEEN GRID POINTS IS INPUTTED, AND X│
│ AND Y COORDINATE VALUES OF THE GRID POINTS ARE CALCULATED FROM│
│ ENTIRE X AND Y MAXIMUM/MINIMUM VALUES OF A MODEL RECOGNIZED   │
│ AUTOMATICALLY. (A Z COORDINATE VALUE IS NOT PROVIDED, THE GROUP│
│ OF GRID POINTS IS ON AN X-Y PLANE)                           │
└────────────────────────────────────────────────────────────┘
                          │
                          ▼                              SP6
┌────────────────────────────────────────────────────────────┐
│ A VALUE OBTAINED FROM ADDING A CORRECTION VALUE FOR AVOIDING  │
│ OVERCUTTING WHICH IS CALCULATED FROM THE MAXIMUM VALUE OF THE │
│ DISTANCE BETWEEN TWO POINTS IN THE PATCH TO THE VALUE IS DEFINED│
│ AS A TOOL RADIUS FOR THE PROCESS FROM THE TOOL RADIUS OF A FLAT│
│ ENDMILL.                                                     │
└────────────────────────────────────────────────────────────┘
                          │
                          ▼                              SP7
┌────────────────────────────────────────────────────────────┐
│ A CIRCLE DOMAIN WITH A RADIUS RT IS GENERATED ON THE X-Y PLANE│
│ AROUND EACH GRID POINT, AND THE PATCH WITH AN X-Y COORDINAT VALUE│
│ EXISTING WITHIN THE CIRCLE DOMAIN IS EXTRACTED.             │
└────────────────────────────────────────────────────────────┘
                          │
                          ▼                              SP8
┌────────────────────────────────────────────────────────────┐
│ A SQUARE CIRCUMSCRIBED WITH THE CIRCLE DOMAIN IS DEFINED, WHETHER│
│ OR NOT EACH SPLIT POINT IN THE EXTRACTED PATCH COMES WITHIN THE│
│ CIRCLE DOMAIN IS DECIDED, AND THE SPLIT POINT EXISTING WITHIN │
│ THE CIRCLE DOMAIN IS EXTRACTED.                             │
└────────────────────────────────────────────────────────────┘
                          │
                          ▼                              SP9
┌────────────────────────────────────────────────────────────┐
│ A Z COORDINATE VALUE OF THE POINT HIGHEST IN Z VALUE OF THE GROUP│
│ OF SPLIT POINTS EXTRACTED WITH REFERENCE TO THE GRID POINT IS │
│ IDENTIFIED AS THE Z COORDINATE VALUE OF THE GRID POINT.      │
└────────────────────────────────────────────────────────────┘
                          │
                          ▼                              SP10
┌────────────────────────────────────────────────────────────┐
│ A CORREOTION VALUE TO PREVENT OVERCUTTING IS ADDED TO THE Z  │
│ VALUE OF EACH GRID POINT, AND THE VALUE IS IDENTIFIED AS A FINAL Z│
│ COORDINATE VALUE OF THE GRID POINT.                         │
└────────────────────────────────────────────────────────────┘
                          │
                          ▼       SP11
                     ( END )
```

## FIG. 7

FIG.8

FIG.9

F IG.10

F IG.11

F IG .12

F IG .13

FIG.14

FIG.15

FIG . 16

FIG . 17

EP 0 459 251 A1

MODEL

$R$     $R$     (S1.S2.S3.SE)

$P_{S61}(P_{S62}, P_{S63}, P_{SE})$

$P_{E61}(P_{E62}, P_{E63}, P_{E6E})$

$P_{S11}(P_{S12}, P_{S13}, P_{S1E})$

$P_{E11}(P_{E12}, P_{E13}, P_{E1E})$

PIC

$P_{E01}(P_{E02} \; P_{E03} \; P_{E0E})$

$R$

$P_{S01}(P_{S02} \; P_{S03} \; P_{S0E})$

$X_{MIN}$

$X_{MAX}$   $R+\alpha$

$R+\alpha$

Y

X

FIG.18

FIG.19

FIG. 20

FIG.21

FIG.22

FIG. 23

FIG.24

FIG.25

FIG.26

SP17 —( START )

SP18 — EXTRACT LOOP START
POINT

SP19 — RETRIEVE CONTOUR
POINTS AND REGISTER
BRANCH POINTS

SP20
LOOP REALIZED ?   YES   NO

SP25
BACK TRACKING TO
DETECT BRANCH POINT

SP26
BRANCH POINT ?   YES   NO

SP21
SKIP TO BRANCH POINT ,
RETRIEVE CONTOUR
POINTS AND REGISTER
BRANCH POINTS

BRANCH   POINTS
ENDING   ?   NO
SP22

CONTOUR POINTS
REMAINING ?   YES
SP23

YES

NO

END — SP24

SP27
BACK TRACKING
NUMBER 20 POINTS
OR BELOW ?   YES
NO

SP28   RELESE BACK TRACKING
AND  SKIP TO BRANCH
POINT

FIG.27

33

FIG.28

FIG.29

FIG.30

FIG.31

FIG.32

FIG.33

FIG.34

FIG.35

FIG.36

FIG.37

FIG.38

FIG.39

FIG.40

FIG.41

FIG.42

FIG.43

FIG.44

European
Patent Office

**EUROPEAN SEARCH
REPORT**

Application Number

**EP 91 10 8044**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 258 897 (SONY CORPORATION)<br>* page 3, line 24 - page 4, line 7 * * page 14, line 5 - page 17, line 16 * * figures 18-30 *<br>– – – | 1,2,4 | G 05 B 19/41 |
| A | EP-A-0 161 321 (FANUC LTD)<br>* page 6, line 19 - page 8, line 5 * * figure 3 *<br>– – – – – | 1-4 | |

TECHNICAL FIELDS
SEARCHED (Int. Cl.5)

G 05 B

The present search report has been drawn up for all claims

| Place of search | Date of completion of search | Examiner |
|---|---|---|
| The Hague | 13 August 91 | NETTESHEIM J.F. |